# NEUE EUROPÄISCHE PATENTSCHRIFT

(11) **EP 0 800 445 B2**
(45) Veröffentlichungstag und Bekanntmachung des Hinweises auf die Entscheidung über den Einspruch: **01.06.2005**
(45) Hinweis auf die Patenterteilung: 07.04.1999
(21) Anmeldenummer: 95942651.1
(22) Anmeldetag: 21.12.1995
(51) Int. Cl.: B29B 17/02

(54) **VERFAHREN UND ANLAGE ZUR AUFBEREITUNG VON MISCHKUNSTSTOFFEN**
PROCESS AND PLANT FOR PROCESSING MIXED PLASTICS
PROCEDE ET INSTALLATION DE TRAITEMENT DE PLASTIQUES MIXTES

(30) Priorität: 05.01.1995 DE 19500224
(43) Veröffentlichungstag der Anmeldung: 15.10.1997
(73) Patentinhaber: Der Grüne Punkt-Duales System Deutschland Aktiengesellschaft, 51145 Köln (DE)
(72) Erfinder: GUSCHALL, Dietmar, D-57271 Hilchenbach (DE); GUSCHALL, Heiner, D-57271 Hilchenbach (DE); HELMERTH, Axel, D-57072 Siegen (DE); HIMMEL, Jörg, D-57271 Hilchenbach (DE); Fahrbach, Gerhard Dr., D-68723 Plankstadt (DE); Schnettler, Heinz Reiner, D-59759 Arnsberg (DE)
(74) Vertreter: Tönhardt, Marion, Dr.
(86) Internationale Anmeldenummer: PCT/DE1995/001869
(87) Internationale Veröffentlichungsnummer: WO 1996/020819

(56) Entgegenhaltungen:
- WO-A-93/14915
- DE-A- 2 611 980
- DE-A- 3 601 175
- DE-A- 4 301 066
- DE-A- 4 325 948
- DE-A1- 2 546 097
- DE-A1- 3 911 326
- DE-B1- 1 679 834
- NL-A- 7 604 096
- US-A- 3 814 240
- Der Abfallberater für Industrie Handel und Kommunen; Recyclingproxis, Kunstoffe, Grundwerk 1993 ; kapitel 7.2.2 Seiten 12-14 März 1994
- H. Schubert: Aufbereitung fester mineralischer Rohstoffe, Bd 1 Inhaltverzeichnis ; VEB Deutscher Verlag für Grundstoffindustrie ; Leipzig 1964
- H. Schubert : Aufbereitung fester mineralischer Rohstoffe, Bd 1 (Februar 1975) Bd II, April 1978 ; Bd III Mai 1984 Seiten 68 69 194 137 169-174 288-290, 372

## Beschreibung

Die Erfindung betrifft ein Verfahren zur Aufbereitung von Mischkunststoffen nach dem Oberbegriff des Anspruchs 1 und eine Anlage zur Aufbereitung von Mischkunststoffen nach dem Oberbegriff des Anspruchs 30.

Die Aufbereitung (Recycling) von Mischkunststoffen, insbesondere von Mischkunststoffen aus dem Hausmüll, gewinnt zunehmend an Bedeutung. Durch gesetzliche Vorgaben wird verstärkt darauf hingewirkt, die vollständige Verwertung von Kunststoffen im Inland sicherzustellen.

Es sind bereits verschiedene Verfahren und Anlagen zur Aufbereitung von Kunststoffen bekannt.

Aus der deutschen Offenlegungsschrift DE 41 25 164 A1 ist eine Anlage zum Wiederverwertbarmachen von Abfallgut aus Kunststoffmaterial, insbesondere aus der Landwirtschaft, bekannt. Diese enthält mindestens eine Maschine zum Zerteilen des Abfallgutes, die eine Vorwaschmaschine zum Vorwaschen der Abfallstücke speist, eine Mahlmaschine für den zerkleinerten und vorgewaschenen Abfall und eine zweite Waschmaschine zum Waschen des zermahlenen Abfalls. Abschließend werden die Abfallstücke in einer Trockenmaschine und einer Exsikkationsmaschine getrocknet.

Aus der DE 43 29 270 A1 sind eine Anlage und ein Verfahren zur Trennung zerkleinerter Kunststoffe verschiedener chemischer Zusammensetzung und unterschiedlicher Dichte bekannt. Die Anlage ist insbesondere charakterisiert durch eine Trennvorrichtung mit der konstruktiven Ausbildung eines geometrischen Raumes mit zwei gegeneinander gerichteten Kegelteilen zur Schaffung einer laminaren Flüssigkeitsströmung, die die gewünschte Trennung der Kunststoffe ermöglichen soll.

Aus der DE 43 06 781 A1 ist ein Verfahren zur Aufbereitung von kunststoffreichen Müllgemischen bekannt, bei dem zunächst Störstoffe per Hand ausgelesen werden, anschließend das Müllgemisch zerkleinert und dann mit einer Windsichtung in ein vorwiegend Kunststoffe enthaltendes Leichtgut und ein vorwiegend metallische Bestandteile enthaltendes Schwergut getrennt wird. Das kunststoffreiche Leichtgut wird dann mit Hilfe eines nassen Dichtesortierers nach der Dichte sortiert. Die Dichtesortierung erfolgt dabei in mehreren hintereinandergeschalteten Stufen mit unterschiedlichen Trennflüssigkeiten, vorzugsweise in Sortierzentrifugen.

Die genannten Verfahren haben den Nachteil, daß aufgrund der nassen Dichtesortierung bzw. der Waschvorgänge der aufbereitete Kunststoff zunächst einer aufwendigen Trocknung unterzogen werden muß, bevor er einer weiteren Verwertung zugeführt werden kann.

Die Feuchtigkeit eines grob entwässerten Kunststoffmahlgutes haftet vorwiegend auf seiner Oberfläche. Je größer die spezifische Oberfläche eines Gutes ist, um so mehr Feuchtigkeit haftet ihm an. Dies erhöht dementsprechend den zur Trocknung des Kunststoffmahlgutes erforderlichen Aufwand. Insbesondere durch den Trend zu immer dünneren Folienartikeln wird daher die nasse Kunststoffaufbereitung zunehmend unwirtschaftlich.

Aus der deutschen Offenlegungsschrift DE 39 11 326 A1 ist ein Verfahren für die Aufbereitung von aus Kunststofformteilen bestehenden Kühlaggregatgehäusen bekannt, bei dem die Kühlaggregatgehäuse zunächst in einer Shredderstufe zerkleinert werden und bei dem danach aus dem geshredderten Gut die Eisenteile entfernt werden. Das geshredderte Gut wird in einer Schneidmühlenstufe eingeführt und dort auf eine Korngröße von unter 10 mm zerschnitten. In einer Windsichterstufe werden anschließend die Teilchen aus ungeschäumten Kunststoff von den Teilchen aus geschäumten Kunststoff getrennt. Die Teilchen aus geschäumten Kunststoff werden in eine Wirbelstrommühlenstufe eingeführt und dort auf eine Endfeinheit von 0,1 bis 1 mm ausgemahlen. Die ausgemahlenen Teilchen werden aus der Wirbelstrommühlenstufe in eine Zyklonstufe eingeführt, aus welcher der aufbereitete geschäumte Kunststoff abgezogen wird.

Diese ohne nasse Aufbereitungsstufen arbeitende Anlage dient im wesentlichen nur der Trennung des geschäumten Kunststoffs vom ungeschäumten Kunststoff der Kühlaggregatgehäuse.

Beim trocknen Aufbereiten von Kunststoffgemischen, insbesondere bei Gemischen aus dem Hausmüll mit einer großen Sortenvielfalt, besteht das Problem, den aufzubereitenden Kunststoff zuverlässig von Störstoffen, z. B. Papier und der sich bei thermischer Behandlung bildenden Asche, zu befreien, um eine gezielte Weiterverwertung des aufbereiteten Materials zu ermöglichen.

Die Mischkunststoffballen aus der Hausmüllsammlung enthalten die verschiedensten Kunststoffe, die weltweit für Verpackungen eingesetzt werden. Die Kunststoffe sind verbunden mit Papier, Keramiken, Metallen und anderen Fremdstoffen. Diese müssen im Rahmen der Aufbereitung entfernt werden, da sie die stoffliche Verwertbarkeit des Kunststoffs einschränken. So können z. B. Metallreste zum vorzeitigen Verschleiß von Extrusionsmachinen führen.

Der Erfindung liegt die Aufgabe zugrunde, ein Verfahren und eine Anlage zur Aufbereitung von Mischkunststoffen zu schaffen, mit denen durch einen möglichst geringen Energieeinsatz ein Kunststoffagglomerat von hoher Güte erzeugt werden kann.

Diese Aufgabe wird erfindungsgemäß einerseits durch ein Verfahren gemäß dem Anspruch 1 und andererseits durch eine Anlage gemäß dem Anspruch 30 gelöst.

Bei dem erfindungsgemäßen Verfahren wird das aufzubereitende Material zunächst zerkleinert und von magnetischen Stoffe befreit. Erfindungsgemäß wird das zerkleinerte Material in einem Agglomerator durch Pressen kompaktiert oder thermisch agglomeriert, wobei als flüchtige Stoffe, neben Wasserdampf, auch Asche und Papier durch eine Absaugvorrichtung abgesaugt werden. Dann wird das agglomerierte Material getrocknet und das agglomerierte Material gesiebt.

Die Erfindung beruht auf der überraschenden Erkenntnis, daß mit einem geringen Energieeinsatz ein Kunststoffagglomerat von hoher Güte erzeugt werden kann, indem bereits während des Agglomerierens flüchtige Sörstoffe weitgehend abgesaugt werden und anschließend insbesondere der Fernkornanteil des agglomerierten Materials abgesiebt wird.

Durch das Absaugen flüchtiger Stoffe während das Agglomerierens wird ein großer Teil von im Kunststoffgemisch befindlichen Papier, Wasserdampf und Asche entfernt. Die noch im aufzubereitenden Material verbliebenden Reste dieser Stoffe lassen sich gemäß einer bevorzugten Ausführungsform der Erfindung durch eine Absiebung des Feinkornanteils des agglomerierten Materials fast vollständig entfernen. Indem die Absiebung des Feinkornanteils mit einer Trockenstufe für das agglomerierte Material kombiniert wird, läßt sich mit dem erfindungsgemäßen Verfahren ein Kunststoffagglomerat herstellen, dessen Restfeuchte deutlich unter einem Prozent liegt und das die für die rohstoffliche Verwertung erforderlichen Aschewert-Höchstgrenzen unterschreitet.

Insgesamt zeichnet sich das erfindungsgemäße Verfahren dadurch aus, daß aus Mischkunststoff ein Kunststoffagglomerat von hoher Güte in einem reinen Trockenverfahren mit geringem Energieeinsatz gewonnen wird. Ferner fällt bei der Durchführung des Verfahrens kein Abwasser an.

Bei einer bevorzugten Ausführungsform des erfindungsgemäßen Verfahrens wird neben dem Feinkornanteil auch der Grobkornanteil des agglomerierten Materials abgesiebt. Dadurch wird ein Kunststoffaggiomerat erzeugt, dessen Korngröße sich in einem bestimmten vorgegebenen Bereich bewegt und das daher besonders gut für die Weiterverwertung geeignet ist.

Vorteilhafterweise wird das aufzubereitende Material mit einem Schneidwalzenzerkleinerer (Shredder) zerkleinert. Um den Materialdurchsatz in der Zerkleinerungsstufe zu erhöhen, können mehrere Shredder parallel betrieben werden.

Eine weitere Erhöhung des Materialdurchsatzes kann dadurch erreicht werden, daß das aufzubereitende Material vor der Eingabe in den Shredder vorzerkleinert wird. Nach der Vorzerkleinerung lassen sich solche Fremdteile aussortieren, die die Shreddermesser beschädigen und die Funktionsweise des Shredders beeinträchtigen könnten. Das vorzerkleinerte Material wird mit vorzugsweise einem Stopfwerk auf den Shredder aufgegeben, um zu verhindern, daß das aufzubereitende Material auf den Reißwellen des Shredders tanzt.

Zur Abscheidung von Fremdstoffen mit hohem Gewicht nach der Vorzerkleinerung kann das Kunststoffmaterial beispielsweise über eine Klappvorrichtung geführt werden, deren Mechanismus in Abhängigkeit von dem auf ihr lastenden Gewicht ausgelöst wird.

Magnetische Stoffe können aus dem vorzerkleinerten Material mit einem Magnetabscheider entfernt werden.

Nach der Zerkleinerung des Materials mit einem Shredder oder dgl. wird das aufzubereitende Material zum Aussortieren magnetischer Stoffe vorzugsweise unter einem Überbandmagneten entlanggeführt.

In einer bevorzugten Ausführungsform der Erfindung wird das zerkleinerte Material in einem Drehrohrtrockner thermisch getrocknet. Durch die kontinuierliche Bewegung des Materials während des Trockenvorgangs können sich an dem Material anhaftende Schmutz- und Inertpartikel ablösen.

Erfindungsgemäß kann weiterhin vorgesehen sein, daß besonders schwere Kunststoffe und andere schwere Fremdteile mit Hilfe einer Windsichtung aus dem aufzubereitenden Material abgetrennt werden. Dabei wird der körnige Anteil des aufzubereitenden Materials vorzugsweise mit einem mechanischen Förderer aus der Windsichtung ausgetragen, während Folienteile und dgl. zur Entlastung des Förderers durch einen Windkanal aus dem Windsichter in den mittleren Abschnitt des mechanischen Förderers geführt werden.

Um aus dem zerkleinerten und von magnetischen Stoffen befreiten aufzubereitenden Material weitere Inertstoffe (nicht gemeinsam mit dem Kunststoff weiterverarbeitbare Bestandteile) zu entfernen, kann erfindungsgemäß vorgesehen sein, daß das aufzubereitende Material von einem mit einem Siebboden versehenen Schwingungsförderer (Siebstrecke) transportiert wird.

Um einen regelmäßigen Materialfluß in den Agglomerator sicherzustellen, ist es vorteilhaft, wenn das aufzubereitende Material vor der Eingabe in den Agglomerator in einem Puffersilo gelagert und dabei durch Umwälzung homogenisiert wird. Dieser Verfahrensschritt trägt auch zur Homogenisierung des nach dem Agglomerieren entstandenen Endprodukts bei.

Beim Agglomerieren wird das aufzubereitende Material in dem Agglomerator vorzugsweise zunächst angeschmolzen und dann schlagartig abgekühlt (thermisches Agglomerieren), wobei flüchtige Stoffe abgesaugt werden.

Bei einer bevorzugten Ausführungsform der Erfindung wird das agglomerierte Material auf einer Trockenstrecke auf eine bestimmte, vorgegebene Restfeuchte getrocknet und der Feinkornanteil des agglomerierten Materials mit einem Trommelsieb abgesiebt. Dabei wird das aufzubereitende Material vorzugsweise auf eine Restfeuchte von weniger als 1 % getrocknet. Um flüchtige Stoffe, wie Papier und Asche, möglichst vollständig aus dem agglomerierten Material zu entfernen, werden mit dem Trommelsieb die Feinkörner mit einer Größe von weniger als 1 mm bis 2 mm, vorzugsweise weniger als 1.6 mm, aus dem agglomerierten Material abgesiebt.

Der grobkörnige Anteil des agglomerierten Materials wird vorzugsweise zusammen mit den Flusen mit einem Stangensieb aus dem agglomerierten Material ausgesiebt. Dabei ist das Grobkornsieb vorzugsweise so ausgestaltet, daß die Körner mit einer Größe von mehr als 20 mm aus dem agglomerierten Material entfernt werden.

Um für die Weiterverarbeitung ein Agglomerat mit einer möglichst einheitlichen Korngröße zur Verfügung zu stellen, kann der Überkornanteil des im Prozeß verbliebenen Materials, insbesondere Körner mit einer Größe von mehr als 8 mm, ausgesiebt und mit einer Schneidmühle erneut zerkleinert werden.

Ferner ist es vorteilhaft, wenn aus dem agglomerierten Material die nichtmagnetischen Metalle (NE-Metalle), mit einem Wirbelstromabscheider herausgetrennt werden.

Eine bevorzugte Ausführungsform des erfindungsgemäßen Verfahrens ist insgesamt durch die folgenden Schritte gekennzeichnet:
a) Zerkleinen des Materials, vorzugsweise mit einem Shredder;
b) Abscheiden magnetischer Materialien, vorzugsweise mit einem Überbandmagnet;
c) thermisches Trocknen des aufzubereitenden Materials, vorzugsweise mit einem Drehrohrtrockner;
d) Aussortieren des Feinkornanteils, vorzugsweise mit einem Trommelsieb;
e) Abscheiden von Schwergut, vorzugsweise mit einer Windsichtung;
f) erneutes Absieben von feinkörnigem Material, vorzugsweise auf einer Siebstrecke;
g) Homogenisieren des aufzubereitenden Materials, vorzugsweise in einem Puffersilo;
h) Agglomerieren des aufzubereitenden Materials in einem Agglomerator mit Absaugvorrichtungen für flüchtige Stoffe;
i) Trockenen des agglomerierten Materials, vorzugsweise auf einer Trockenstrecke;
j) Absieben des Feinkornanteils, vorzugsweise mit einem Trommelsieb;
k) Absieben von groben Körnern und Flusen, vorzugsweise mit einem Stangensieb;
l) Abscheiden nicht magnetischer Materialien, vorzugsweise mit einem Wirbelstromscheider;
m) Absieben des Überkornanteils des im Prozeß verbliebenen Materials, insbesondere von Körnern mit einer Größe von mehr als 8 mm, und Zerkleinern dieser Körner, vorzugsweise mit einer Schneidmühle.

Bei dem erfindungsgemäßen Verfahen werden vorteilhafterweise die aus dem aufzubereitenden Material entfernten Stoffe, insbesondere die magnetischen und die nichtmagnetischen Metalle, die Inertstoffe, die schweren Kunststoffe sowie der abgesiebte Feinkornund Grobkornanteil, zur weiteren Verwertung jeweils getrennt gelagert.

Um bei dem erfindungsgemäßen Verfahren den Materialdurchsatz zu optimieren, ist es möglich, daß von dem aufzubereitenden Material mehrere Windsichter und/oder Siebstrecken parallel durchlaufen werden, wobei das aufzubereitende Material mit Hilfe eines Verteil- und Dosierförderers auf die verschiedenen Windsichter und/oder Siebstrecken verteilt wird.

Unter dem Gesichtspunkt des Umweltschutzes und des Energiesparens ist es vorgesehen, daß die zum Betrieb der Aufbereitungsanlage erforderliche Energie, insbesondere die zur Trocknung erforderliche Energie, durch Kraft- und Wärmekopplung erzeugt wird.

Das mit dem oben beschriebenen, erfindungsgemäßen Verfahren aufbereitete Agglomerat kann einerseits als Ersatz für Primärbrennstoffe industriell genutzt werden. Andererseits ist eine werkstoffliche Weiterverarbeitung möglich. Insbesondere lassen sich aus dem Recycling-Agglomerat neuartige Multifunktionsbauelemente herstellen, z.B. Leichtbauelemente für unterschiedliche Anwendungen im Landschafts- und Wasserbau, für das Verkehrswesen oder verschiedene Schutzfunktionen. Mit ihm lassen sich begrünte Lärmschutzwände ebenso realisieren, wie Deich- und Uferbefestigungen oder eine nicht versiegelte, ökologische Parkplatzgestaltung. Der doppelte Umweltvorteil dieses Bauelements: Auch nach einer langen Gebrauchsdauer wird es nicht zum Abfall, sondern wird beim Hersteller erneut dem Materialkreislauf zugeführt.

Eine Anlage zur Aufbereitung von Mischkunststoffen, mit der insbesondere das erfindungsgemäße Verfahren durchgeführt werden kann, ist durch die Merkmale des unabhängigen Anspruchs 30 charakterisiert.

Die erfindungsgemäße Anlage weist gemäß ihren kennzeichnenden Merkmalen insbesondere einen Agglomerator zum Agglomerieren des zerkleinerten Kunststoffgemisches, Absaugvorrichtungen zum Absaugen flüchtiger Stoffe während des Agglomerierens, eine Trockenstrecke für das agglomerierte Material und ein Feinkornsieb zum Absieben des Feinkornanteils des agglomerierten Materials auf.

Die erfindungsgemäße Anlage ermöglicht die Aufbereitung von Mischkunststoffen in einem reinen Trockenverfahren. Mit Hilfe der Absaugvorrichtungen wird während des Agglomerierens ein großer Teil der flüchtigen Stoffe, die die Qualität des Kunststoffagglomerates herabsetzen würden, neben Wasserdampf, auch Asche und Papier, abgesaugt. Auf einer Trockenstrecke wird die Restfeuchte weiter verringert. Mit dem Feinkornsieb läßt sich schließlich der Feinkornanteil des Agglomerates absieben, der den weit überwiegenden Teil der im Agglomerat verbliebenen flüchtigen Stoffe, wie z.B. Papier und Asche, enthält.

Mit Hilfe der erfindungsgemäßen Anlage läßt sich also ohne die Verwendung von Naßverfahren zum Sortieren und zum Reinigen der Kunststoffe ein Kunststoffagglomerat herstellen, dessen Asche- und Papiergehalt unter den geforderten Höchstgrenzen liegt und das gleichzeitig ohne aufwendige Trockenanlagen eine äußerst geringe Restfeuchte von weniger als einem Prozent aufweist. Dieses Ergebnis wird mit Mischkunststoffen erzielt, wie sie üblicherweise im Hausmüll und dgl. enthalten sind. Eine Einschränkung der Sortenvielfalt der aufzubereitenden Kunststoffe ist nicht notwendig.

Weitere vorteilhafte Ausgestaltungen der erfindungsgemäßen Anlage ergeben sich aus den von Anspruch 30 abhängigen Unteransprüchen.

Weitere Vorteile der Erfindung werden bei der folgenden detaillierten Beschreibung zweier Ausführungsbeispiele des erfindungsgemaßen Verfahrens und eines Ausführüngsbeispiels der erfindungsgemäßen Anlage anhand der Zeichnugen deutlich werden.

Es zeigen:
- Fig. 1a - 1e -: ein Ausführungsbeispiel des erfindungsgemäßen Verfahrens anhand von Ablaufdiagrammen;
- Fig. 2 -: ein zweites Ausführungsbeispiel des erfindungsgemäßen Verfahrens anhand eines Ablaufdiagramms;
- Fig. 3a und 3b -: ein Ausführungsbeispiel der erfindungsgemäßen Anlage, insbesondere zur Durchführung des Verfahrens gemäß Fig. 2;
- Fig. 4 -: ein Ausführungsbeispiel eines Windsichters zur Verwendung in der erfindungsgemäßen Anlage;
- Fig. 5 -: ein Ausführungsbeispiel eines Agglomerators zur Verwendung in der erfindungsgemäßen Anlage;
- Fig. 6 -: ein Ausführungsbeispiel einer Trokkenstrecke mit Feinkornsieb zur Verwendung in der erfindungsgemäßen Anlage.

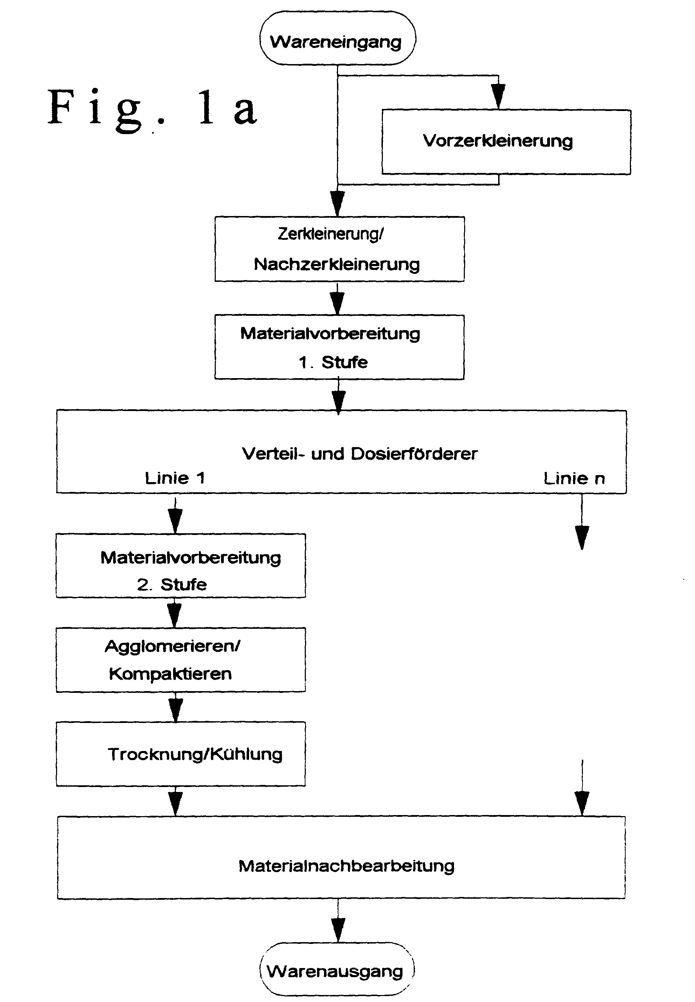

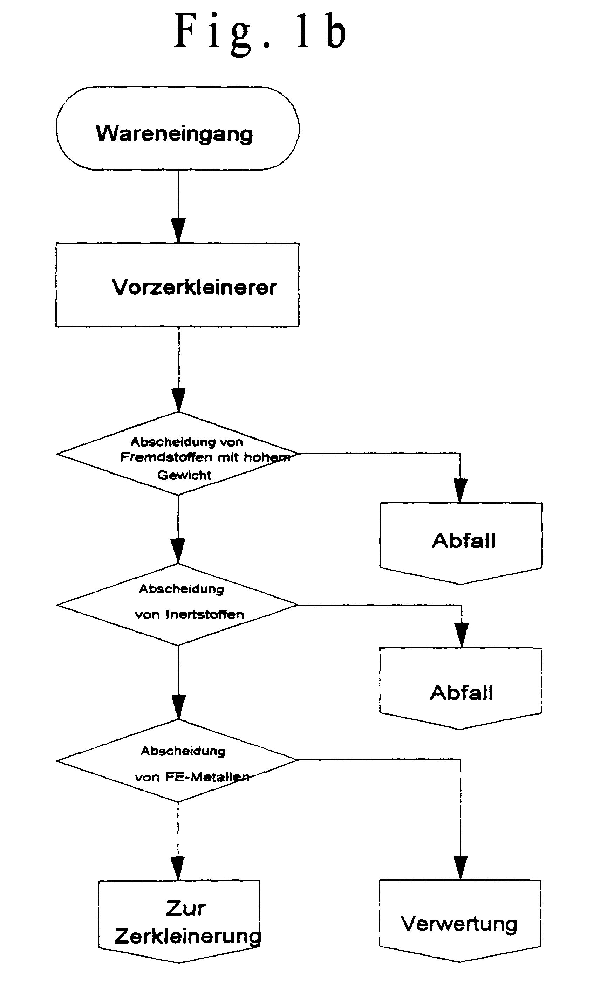

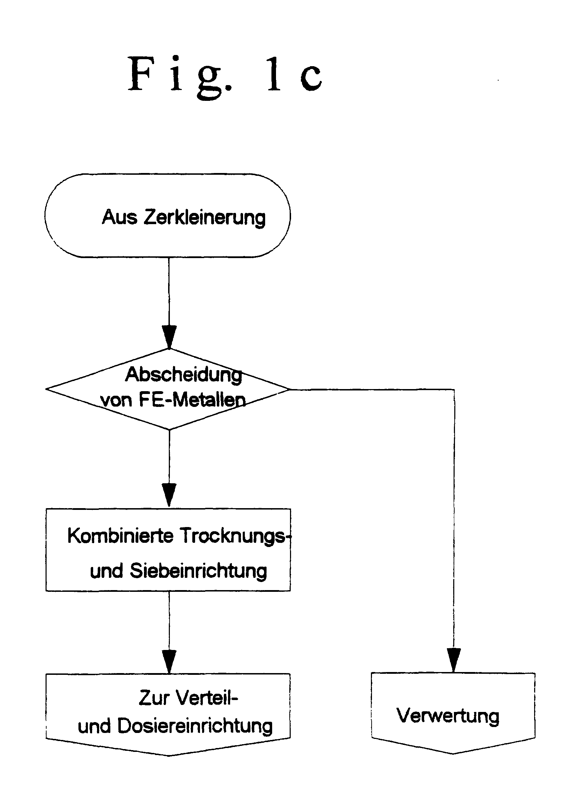

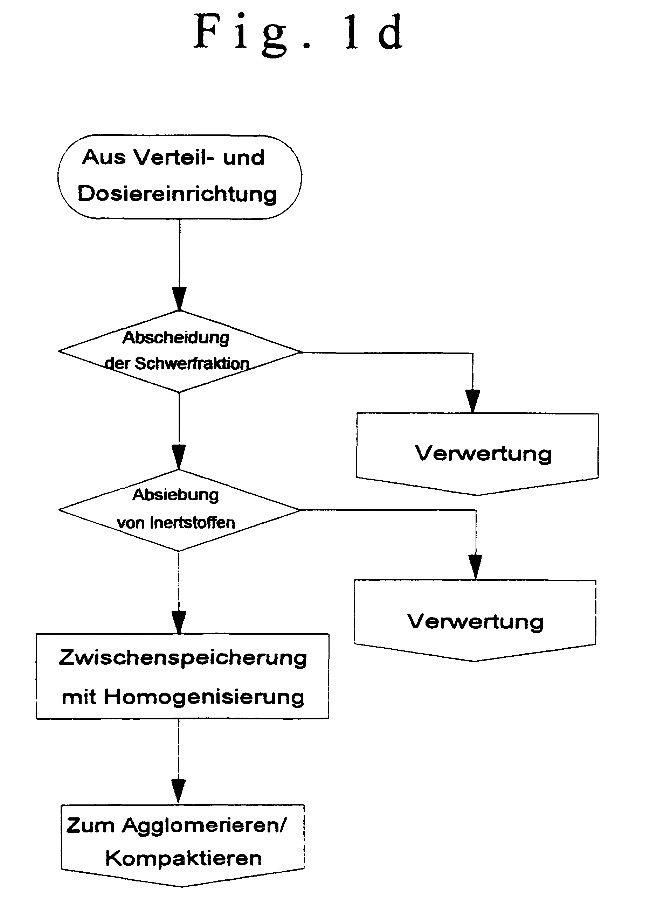

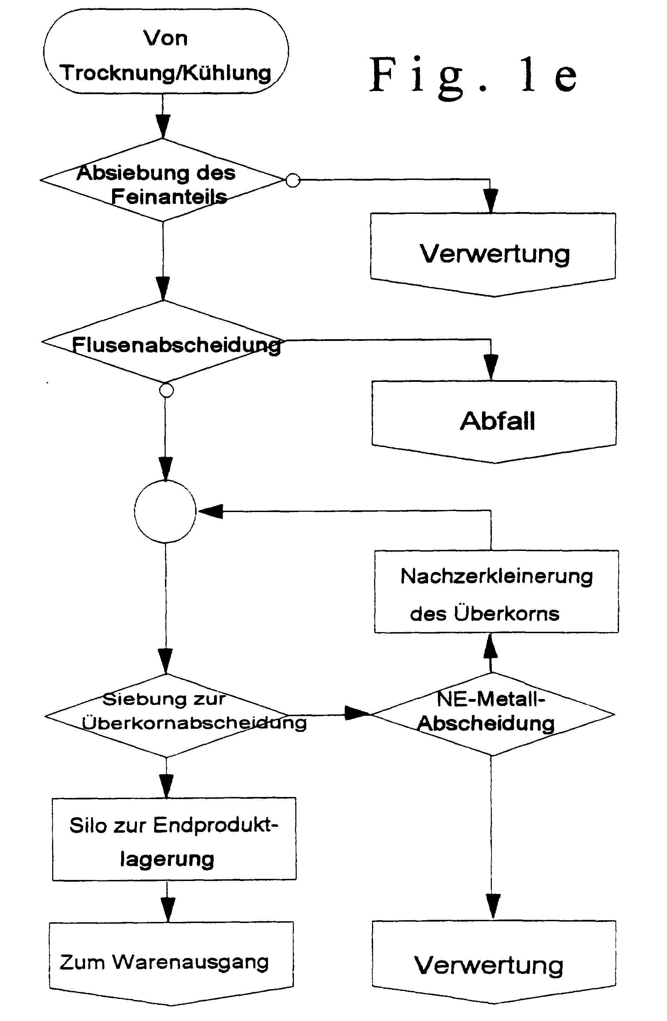

Figur 1 a zeigt eine Übersicht über eine Ausführungsform des erfindungsgemäßen Verfahrens anhand eines zehnstufigen Ablaufdiagramms. Einzelne Schritte dieses Verfahrens, nämlich die Vorzerkleinerung, die Materialvorbereitung der ersten Stufe, die Materialvorbereitung der zweiten Stufe und die Materialnachbearbeitung, werden anschließend anhand der Figuren 1b bis 1 e näher erläutert.

Beim Wareneingang wird das Kunststoff-Müll-Gemisch zunächst vereinzelt, indem beispielsweise der in Kunststoffsäcken vorliegende Müll freigelegt wird. Je nach den Eigenschaften des Kunststoffmülls wird dieser entweder zunächst vorzerkleinert oder direkt in die eigentliche Zerkleinerungsstufe geführt.

Die Vorzerkleinerung des Müllgemisches ist insbesondere dann notwendig, wenn der Kunststoffmüll viele Fremdteile enthält, die die Schneidmesser der Zerkleinerungsvorrichtung beschädigen könnten. Zur Vorzerkleinerung ist beispielsweise eine Guillotinenschere mit einem robustem Messer geeignet, die die ankommenden Kunststoffballen in kleinere Teile zertrennt. Aus dem zertrennten Material lassen sich dann mit Hilfe von Sortiervorrichtungen solche Stoffe heraustrennen, die zu Beschädigungen in der nachfolgenden Zerkleinerungsstufe führen könnten. Dadurch wird der Verschleiß der Zerkleinerungseinrichtung minimiert. Gleichzeitig wird der Materialdurchsatz optimiert, da das vorzerkleinerte Material in der Zerkleinerungsstufe besser geschnitten werden kann.

Das von Störstoffen befreite Müllgemisch wird beispielsweise mit einem Schredder zerkleinert. Das zerkleinerte Material wird dann in die erste Stufe der Materialvorbereitung für die Agglomeration geführt. In dieser Vorbereitungsstufe werden in erster Linie magnetische Materialien abgeschieden, und das Material wird einer ersten Trocknung (Vortrocknung) unterzogen. Weiterhin werden durch Absieben des Feinanteiles Inertstoffe entfernt, die sich nicht gemeinsam mit dem Kunststoff weiterverarbeiten lassen.

Aus der ersten Stufe der Materialvorbereitung wird das aufzubereitende Material mit einem Verteilund Dosierförderer in verschiedene parallele Zweige der Kunststoffaufbereitungsanlage transportiert. Jeder dieser Zweige umfaßt eine zweite Stufe der Materialvorbereitung, eine Vorrichtung zum Kompaktieren bzw. Agglomerieren des Materials sowie eine Trockenvorrichtung.

In der Materialvorbereitung der zweiten Stufe werden schwere Teilchen und Inertstoffe aus dem aufzubereitenden Material entfernt und das aufzubereitende Material dann in einem Zwischenspeicher (Puffersilo) homogenisiert.

Das in den Materialvorbereitungsstufen 1 und 2 konditionierte Material wird in einem Agglomerator durch Pressen kompaktiert (preß-agglomeriert) oder durch Anschmelzen und schlagartiges Abkühlen thermisch agglomeriert; Ziel ist die Herstellung eines rieselfähigen Haufwerks. Während des Agglomerierens werden kontinuierlich als flüchtige Stoffe, neben Wasserdampf, auch Asche und Papier äbgesaugt. Dadurch werden solche Stoffe, die die weitere Verwertung des Agglomerats erschweren oder sogar unmöglich machen würden, weitgehend entfernt. Das agglomerierte Material wird anschließend in einer Trockenstufe auf die gewünschte Restfeuchte (üblicherweise kleiner als 1%) getrocknet.

Das in den verschiedenen Zweigen der Aufbereitungsanlage kompaktierte und getrocknete Material wird dann der Materialnachbearbeitung zugeführt.

Die Materialnachbearbeitung dient dazu, das agglomerierte Material abschließend so zu konditionieren, daß es industriell weiterverwertet werden kann. Dazu wird aus dem agglomerierten und getrockneten Material zunächst der Feinkornanteil, vorzugsweise Körner mit einer Größe von weniger als 1.6 mm, abgesiebt. Anhand von Versuchen wurde nämlich festgestellt, daß in dem Feinkornanteil mit einer Größe von weniger als 1.6 mm der überwiegende Anteil der noch verbliebenen flüchtigen Stoffe, wie Papier und Asche, enthalten ist. Durch die Feinkornabsiebung lassen sich daher die Konzentrationen an Asche und Papier in dem Kunststoffagglomerat unter die für die rohstoffliche Verwertung des Materials erforderlichen Höchstgrenzen drücken.

Anschließend wird der Grobkornanteil, insbesondere Körner mit einer Größe von mehr als 20 mm, aus dem Kunststoffagglomerat abgesiebt, um ein möglichst einheitliches Haufewerk zu erhalten. Das im Prozeß verbliebene Material wird von nichtmagnetischen Metallen befreit und ggf. nachzerkleinert.

Das nachbereitete agglomerierte Material wird dann in einem Lagersilo gelagert, bis es einer weiteren Verwertung zugeführt wird.

Nachfolgend werden die Verfahrensschritte Vorzerkleinerung, Materialvorbereitung der ersten Stufe, Materialvorbereitung der zweiten Stufe und Materialnachbearbeitung anhand der Figuren 1b bis 1e detailliert erläutert.

Figur 1 b zeigt ein Flußdiagramm für die Vorzerkleinerung des Kunststoffgemisches. Die angelieferten Kunststoffballen werden vorzugsweise mit einer Guillotinenschere oder einem vergleichbaren Aggregat zur Grobzerkleinerung vorzerkleinert. Das vorzerkleinerte Material wird über eine Klappe geführt, die in Abhängigkeit von dem auf ihr lastenden Gewicht ausgelöst wird. Auf diese Weise werden Fremdstoffe mit hohem Gewicht aus dem Müllgemisch entfernt. Anschließend werden durch Absieben des Feinkornanteils des Kunststoffgemisches solche Inertstoffe entfernt, die sich nicht gemeinsam mit dem Kunststoff weiterverarbeiten lassen und beispielsweise bei der thermischen Behandlung in einem Agglomerator unter Aschebildung verbrennen würden. Schließlich werden mit einem Magnetabscheider magnetische Materialien abgeschieden.

Das auf diese Weise vorzerkleinerte und von Störstoffen befreite Material läßt sich in der eigentlichen Zerkleinerungsstufe effizient weiterbearbeiten. Wird die Nachzerkleinerung beispielsweise mit einem Schredder durchgeführt, so wird durch die oben beschriebene Vorbehandlung des Materials eine Beschädigung der Schreddermesser verhindert und die Haltbarkeit des Schredders erhöht. Gleichzeitig kann dieser das vorzerkleinerte Material besser zerschneiden.

Figur 1 c zeigt, wie das zerkleinerte Material in einer ersten Stufe zum Agglomerieren vorbereitet wird. Dazu werden zunächst die magnetischen Metalle mit Hilfe eines Magnetabscheiders aus dem aufzubereitenden Material entfernt. Diese Metalle werden gemeinsam mit den bei der Vorzerkleinerung abgetrennten magnetischen Metallen einer getrennten Verwertung zugeführt.

Das Material wird dann in einem Drehrohrtrockner thermisch getrocknet. Dadurch, daß sich das aufzubereitende Material während der Trocknung bewegt, können sich anhaftende Schmutz- und Inertpartikel von diesem ablösen. Vorteilhafterweise ist der Drehrohrtrockner als Trommelsieb (Wälzsieb) ausgelegt, so daß die während der Trocknung abgelösten Schmutz- und Inertpartikel abgesiebt werden. Damit wird u. a. die Konzentration an Partikeln vermindert, die bei thermischer Behandlung (z. B. beim Agglomerieren) des aufzubereitenden Materials zur Aschebildung beitragen.

Die zweite Stufe der Materialvorbereitung für das Agglomerieren ist in dem Ablaufdiagramm gemaß Figur 1d dargestellt. Das aufzubereitende Material wird mit einem Verteil- und Dosierförderer (siehe Figur 1a) in eine (von mehreren parallel geschalteten) Windsichterstufe (Stromklassierer) eingeführt. In dem Windsichter werden insbesondere schwere Kunststoffe, wie z.B. PVC, aus dem aufzubereitenden Material abgetrennt. Diese Stoffe werden anschließend gesondert einer weiteren Verwertung zugeführt. In dem Windsichter werden außerdem solche schweren Fremdstoffe aus dem aufzubereitenden Material abgetrennt, die von dem Magnetabscheider nicht erfaßt wurden. Darüber hinaus werden die weiterzuverarbeitenden leichten Kunststoffe über eine Siebstrecke geführt, auf der weitere Inertstoffe abgesiebt werden. Diese Siebstrecke kann beispielsweise als Schwingförderer mit einem Siebboden ausgestaltet sein. Alternativ kann das aufzubereitende Material über einen festen Siebrost geleitet werden. Dabei reichern sich die Inertstoffe in dem Siebunterlauf an. Die Größe der Sieböffnung wird vorzugsweise so gewählt, daß Körner mit einer Größe von weniger als 5mm aus dem aufzubereitenden Material abgesiebt werden.

Soweit möglich werden auch die abgesiebten Inertstoffe einer gesonderten Verwertung zugeführt.

Das von schweren Kunststoffen und Inertstoffen befreite, aufzubereitende Gut wird in einem Puffersilo zwischengespeichert. In dem Puffersilo wird das aufzubereitende Material durch Umwälzung homogenisiert. Falls notwendig kann es dort auch weiter getrocknet werden. Ferner dient das Puffersilo der Steuerung des Materialflusses in den Agglomerator.

Das in dem Puffersilo homogenisierte Material wird - wie oben beschrieben - in dem Agglomerator unter Absaugung flüchtiger Stoffe agglomeriert. Anschließend erfolgt eine thermische Trocknung in einer Trockenstufe (siehe Figur 1a).

Von besonderer Bedeutung für die vorliegende Erfindung ist auch die weitere Materialnachbearbeitung im Anschluß an das Kompaktieren und Trocknen. Diese Materialnachbearbeitung ist in Figur 1 e dargestellt.

Aus dem durch Anschmelzen und schlagartiges Abkühlen agglomerierten und anschließend getrocknetem Material wird zunächst der Feinanteil, insbesondere alle Körner mit einer Größe von weniger als 1.6mm, abgesiebt. Dazu wird vorzugsweise ein Trommelsieb verwendet. Es kommen aber auch Magnetsiebmaschinen in Frage. Experimentelle Untersuchungen haben gezeigt, daß beim Absieben des Feinanteiles diejenigen flüchtigen Stoffe, wie z.B. Asche und Papier, die beim Agglomerieren nicht abgesaugt werden konnten, aus dem aufzubereitenden Material entfernt werden. Dadurch ist es mit dem erfindungsgemäßen Verfahren möglich, ohne eine nasse Reinigungsstufe ein Kunststoffagglomerat mit einer sehr hohen Güte und einer geringen Konzentrationen an Asche und Papier herzustellen.

Der abgesiebte Feinanteil des aufzubereitenden Materials kann ggf. wiederum einer gesonderten Verwertung zugeführt werden.

Nach dem Passieren einer Flusen- und Grobkornabscheidungs-Stufe, die beispielsweise aus einem Stangensieb bestehen kann, mit dem Körner von mehr als 20 mm aus dem aufzubereitenden Material entfernt werden, wird das aufzubereitende Material zum Aussortieren von Überkorn erneut gesiebt. Aus dem aussortierten Überkorn (z. B. Körner von mehr als 8 mm Durchmesser) werden zunächst die nichtmagnetischen Metalle entfernt. Dazu wird vorzugsweise eine Wirbelstromscheidung verwendet. Mit ihr lassen sich nichtmagnetische (paramagnetische) Metalle, wie z. B. Kupfer, Aluminium und Messing, zuverlässig aus dem Überkornanteil des Kunststoffs heraustrennen. Der von metallischen Störstoffen befreite Überkornanteil wird anschließend nachzerkleinert (beispielsweise mit einer Schneidmühle) und erneut in die Siebstufe zur Überkornabscheidung gegeben.

Für die aussortierten nichtmagnetischen Metalle ist eine gesonderte Verwertung vorgesehen. Im übrigen kann das Aussortieren der nichtmagnetischen Metalle auch zwischen der Feinkornabsiebung und der Überkornabscheidung, z. B. unmittelbar nach der Flusenabscheidungs-Stufe, geschehen.

Nach dem Passieren der Siebstufe zur Überkornabscheidung wird das agglomerierte Material schließlich in ein Silo zur Endproduktlagerung transportiert. In diesem Silo kann das Agglomerat ggf. durch Umwälzung weiter homogenisiert werden. Gleichzeitig wird durch die mechanische Umwälzung Brückenbildung in dem Agglomerat vermieden. Aus diesem Silo wird das Agglomerat bei Bedarf ausgetragen und kann dann industriell verwertet werden.

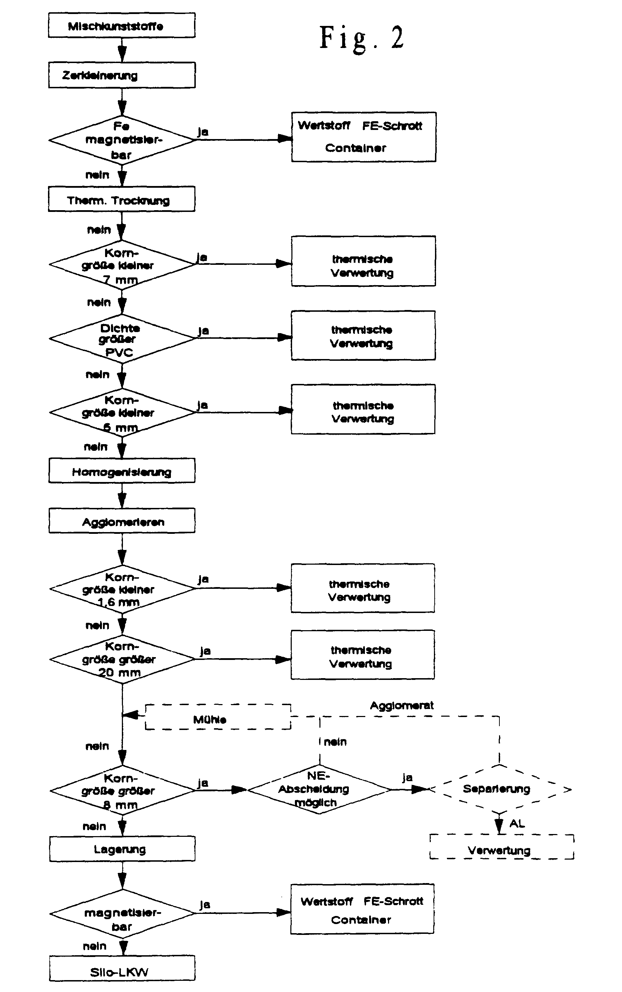

Eine andere Ausführungsform des erfindungsgemäßen Verfahrens ist in Fig. 2 anhand eines weiteren Flußdiagramms dargestellt.

Bei diesem Ausführungsbeispiel wird der Mischkunststoff-Müll in folgenden Schritten aufbereitet:
a) Zerkleinerung des aufzubereitenden Materials:
b) Abscheidung magnetischer (insbesondere ferromagnetischer) Materialien;
c) thermisches Trocknen des aufzubereitenden Materials;
d) Absieben des Feinkornanteils mit einer Körngröße von weniger als 7 mm;
e) Heraustrennen der Schwerfraktion mit einer Dichte größer als PVC;
f) Absieben des Feinkornanteils mit einer Korngröße von weniger als 5 mm;
g) Lagerung und Homogenisierung des Materials in einem Puffersilo;
h) Agglomerieren des aufzubereitenden Materials;
i) thermisches Trocknen des Materials;
j) Absieben des Feinkornanteils mit einer Korngröße von weniger als 1.6 mm;
k) Absieben des Grobkornanteils mit einer Korngröße von mehr als 20 mm;
l) Absieben der Körner mit einer Größe von mehr als 8mm; Abscheidung nichtmagnetischer Metalle aus dem abgesiebten Gut; Zerkleinern des abgesiebten Guts mit einer Schneidmühle und Rückgabe des abgesiebten Guts in die Materialaufbereitungsanlage;
m) Lagerung des aufbereiteten Materials in einem Lagersilo.

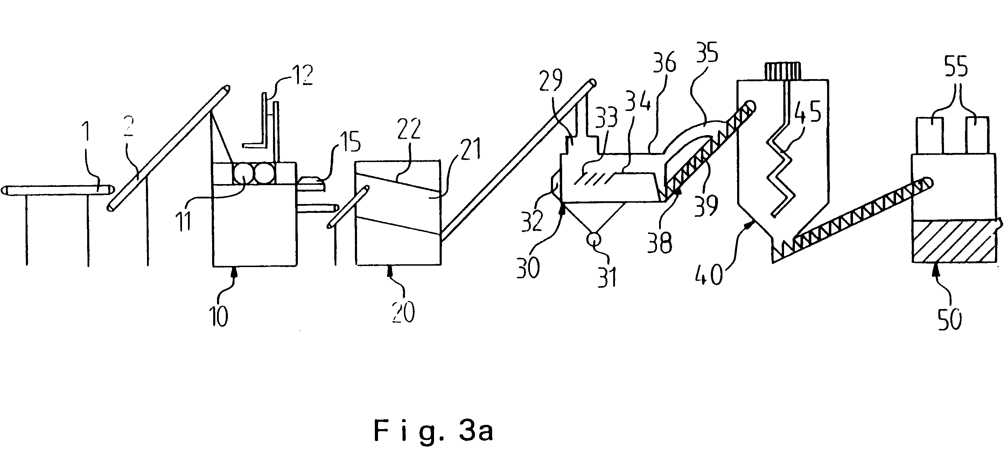

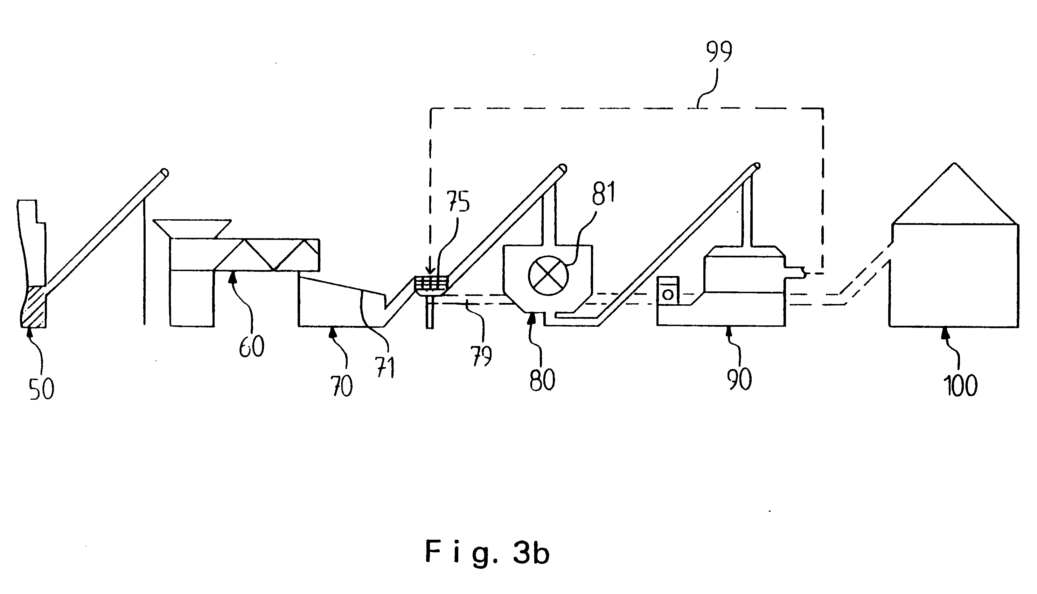

Eine Aufbereitungsanlage zur Durchführung des Verfahrens gemäß Fig. 2 wird nachfolgend anhand von Fig. 3 erläutert. Es zeigt Fig. 3a den ersten Teil der Aufbereitungsanlage, insbesondere die Stufen zur Materialvorbereitung und den Agglomerator, und Fig. 3b den zweiten Teil der Aufbereitungsanlage, insbesondere die Stufen zur Materialnachbereitung und das Lagersilo. Auf die nähere Beschreibung der Transportmittel (Förderbänder, Schneckenförderer, pneumatische Förderer und dergl.) zwischen den einzelnen Aufbereitungsstufen wird verzichtet, sofern die Transportmittel nicht aufgrund zusätzlicher Merkmale (Siebboden, Trockenaggregat) für die Materialaufbereitung an sich von Bedeutung sind.

Dies Anlage umfaßt als erste Aufbereitungsstufe einen Shredder (Schneidwalzenzerkleinerer) 10. Der Shredder 10 ist mit einem Stopfwerk 12 versehen, mit dem das Aufgabegut auf die Schneidwalzen 11 gedrückt werden kann. Hinter dem Shredder ist ein Überbandmagnet 15 zum Abscheiden magnetischer Materialien angeordnet.

Die nächste Aufbereitungsstufe besteht aus einem Drehrohrtrockner 20, der zugleich als Trommelsieb fungiert. Dazu sind die Wände 22 der Trommel 21 mit Sieblöchern versehen.

Die dritte Aufbereitungsstufe bildet ein Windsichter 30 zum Abtrennen schwerer Bestandteile des Kunststoffgemisches. In dem Windsichter (Aeroklassierer) wird das unterschiedliche Bewegungsverhalten von Körnern verschiedener Größe und Dichte in einem Luftstrom ausgenutzt, um Stoffe mit einer großen Massendichte aus dem aufzubereitenden Gut zu entfernen. Der Windsichter 30 weist an seinem vorderen Ende ein Gebläse 32 auf, mit der ein Luftstrom in Richtung auf das hintere Ende des Windsichters 30 erzeugt wird. Zur Lenkung des Luftstroms sind Leitbleche 33 vorgesehen, die in Transportrichtung des Gutes geneigt sind. In dem Aufgabebereich 29 des Winsichters 30 ist eine Magnetplatte angeordnet, um magnetische Stoffe aus dem in den Windsichter 30 eingegebenen Gut abscheiden zu können. Der Austrag 31 dient zum Entnehmen der schnell absinkenden, schweren Bestandteile aus dem Windsichter 30.

Im hinteren Abschnitt des Windsichters 30 sammelt sich der körnige Anteil des aufzubereitenden Material auf einem Siebblech 34, welches im wesentlichen parallel zum Luftstrom aus dem Gebläse 32 angeordnet ist und welches als Schwingsieb ausgebildet ist. Dabei werden Körner mit einem Durchmesser von weniger als 5 mm als Siebunterlauf abgesiebt und können bei dem Austrag 31 aus dem aufzubereitenden Material entfernt werden. Die größeren Körner (Siebüberlauf) gelangen auf dem Schwingsieb 34 zu dem im unteren Bereich des hinteren Abschnitts des Windsichters 30 liegenden Eingang des Kratzförderers 38 und werden von diesem zur nächsten Aufbereitungsstufe gefördert.

In dem Bereich oberhalb des Schwingsiebs 34 werden Hohlkörper, Folienteile und dergl. von dem Luftstrom des Gebläses 32 in den Windkanal 35 geblasen, der den Windsichter 30 mit dem mittleren Abschnitt des Kratzförderers 38 verbindet. In dem genannten oberen Bereich des Windsichters 30 angeordnete Sieblöcher 36 dienen der Druckentlastung.

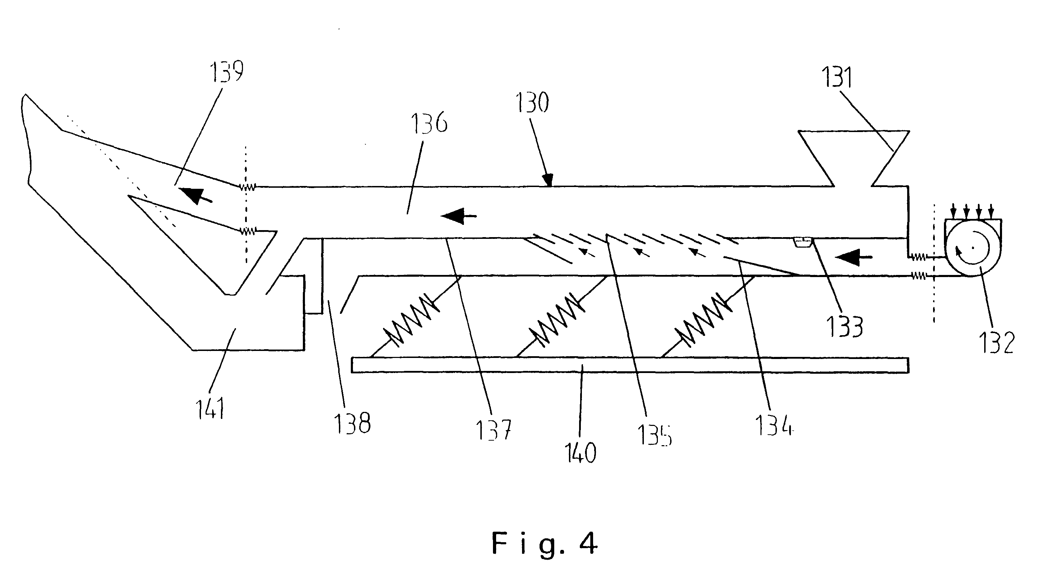

Ein vergleichbarer Windsichter wird unten anhand der Fig. 4 im Detail beschrieben.

In dem Puffersilo 40 kann das zerkleinerte und von Fremdstoffen befreite Kunststoffgemisch zwischengelagert werden. Zur Umwälzung des Kunstoffgemisches ist das Puffersilo 40 mit einer vertikalen Schnecke 45 versehen. Das Puffersilo dient ferner dazu, den Materialfluß in den Agglomerator 50 zu steuern.

Der Agglomerator 50 weist Absaugvorrichtungen 55 auf, mit denen während des Agglomerierens als flüchtige Stoffe, neben Wasserdampf, auch Asche und Papier abgesaugt werden können.

Zum Trocknen des agglomerierten Materials dient die Trockenstrecke 60, auf der zugleich mit einem Trommelsieb der Feinkornanteil des agglomerierten Materials abgesiebt werden kann.

Nach der Trockenstrecke und dem Feinkornsieb ist ein Stangensieb 70 zur Abscheidung von Flusen und groben Körnern vorgesehen. Die Siebboden 71 des Stangensiebs 70 ist so gelocht, daß der Grobkornanteil des agglomerierten Gutes (Körner mit mehr als 20 mm Größe) als Siebüberlauf abgesiebt werden kann.

Der Siebunterlauf-Austrag des Stangensiebes 70 ist mit einem bewegten Sieb, z. B. einem Schwingungssieb 75 oder einem Trommel- bzw. Taumelsieb, verbunden, mit dem das agglomerierte Material in einen Anteil mit Körnern von mehr 8 mm Größe (Siebüberlauf) und einen Anteil mit Körnern von weniger als 8 mm Größe (Siebunterlauf) getrennt wird. Der aus Körnern mit einer Größe von weniger als 8 mm bestehende Siebunterlauf-Austrag ist direkt durch das Förderband 79 mit dem Lagersilo 100 verbunden.

Für die Körner mit einer Größe von mehr als 8 mm ist eine weitere Aufbereitung vorgesehen, wozu der Austrag des Siebüberlaufs mit einem Wirbelstromabscheider 80 verbunden ist.

In dem Wirbelstromabscheider 80 können mit Hilfe eines rotierenden Polrades 81 nichtmagnetische Metalle aus dem Kunststoffgemisch herausgetrennt werden. Der Nichtmetall-Austrag des Wirbelstromabscheiders 80 ist mit einer Schneidmühle 90 verbunden. Die Schneidmühle 90 dient einer weiteren Zerldeinerung der Körner mit einer Größe von mehr als 8 mm. Wie in Fig. 3 schematisch anhand der gestrichelten Linie 99 dargestellt, ist der Austrag der Schneidmühle 90 wiederum mit dem Schwingsieb 75 verbunden, wo die gemahlenen Körner erneut gesiebt werden können. Mit diesen Maßnahmen wird sichergestellt, daß in dem Lagersilo 100 nur Körner mit einer Größe von weniger als 8 mm zur weiteren industriellen Verwertung gelagert werden.

Alternativ kann der Wirbelstromabscheider 80 auch zwischen dem Feinkornsieb und dem Überkornsieb 75, z. B. unmittelbar nach dem Stangensieb 70, angeordnet sein.

Es wird nun beschrieben, wie das in Fig. 2 dargestellte Verfahren zur Aufbereitung von Mischkunststoffen in der in Fig. 3 gezeigten Anlage abläuft.

Mit Hilfe von Förderbändern 1, 2 wird der - gegebenenfalls vorzerkleinerte - Mischkunststoff-Müll in den Shredder 10 eingegeben. Um zu verhindern, daß sich bei voluminösen Kunststoffteilen niedrigen Gewichts, wie z.B. Folien und Hohlkörpern, Einzugsprobleme einstellen, da z. B. der Hohlkörper nicht erfaßt wird, sondern auf den rotierenden Walzen tanzt, wird das aufzubereitende Material mit dem Stopfwerk 12 auf die rotierenden Walzen 11 gedrückt. Das aufzubereitende Material wird in dem Shredder 10 auf eine vorgegebene Größe, vorzugsweise 50 mm bis 65 mm, zerkleinert. Das zerkleinerte Material wird auf dem Förderband 19 aus dem Shredder ausgetragen.

Hinter dem Shredder 10 werden magnetische Materialien, insbesondere ferromagnetische Stoffe, aus dem Kunststoff-Müllgemisch mit einem Überbandmagneten 15 herausgetrennt.

Das zerkleinerte und von magnetischen Stoffen befreite Material wird in den Drehrohrtrockner 20 gefördert, wo es thermisch getrocknet wird. Durch die Rotation der Trommel 21 wird das Material während des Trocknens bewegt, so daß sich diesem anhaftende Schmutz- und Inertpartikel ablösen. Da die Wand 22 der Trommel 21 mit Sieblöchern versehen ist, wird während des Trockenvorganges zugleich der Feinkornanteil mit einer Größe von weniger als 7 mm aus dem aufzubereitenden Gut abgesiebt. Dieser Feinkornanteil enthält Inertstoffe, wie z. B. Sandkörner, Glassplitter usw., die nicht gemeinsam mit dem Kunststoff weiter aufbereitet werden sollen und beispielsweise beim Agglomerieren zur Aschebildung beitragen würden.

Vorteilhafterweise wird zur thermischen Trocknung die Abwärme benutzt, die bei der Eigenstromerzeugung für die Aufbereitungsanlage mit einem Diesel-Aggregat entsteht.

Das getrocknete und von Inertstoffen befreite Material wird dann zur Abscheidung von Schwergut durch den Aufgabebereich 29 in den Windsichter 30 eingegeben und von dem durch das Gebläse 32 erzeugten Luftstrom erfaßt. In dem Windsichter (Aeroklassierer) wird das unterschiedliche Bewegungsverhalten von Körnern verschiedener Größe und Dichte in einem Luftstrom ausgenutzt, um Stoffe mit einer größeren Dichte als PVC aus dem aufzubereitenden Gut zu entfernen. Dies betrifft zum einen schweren Kunststoff und zum anderen solche Fremdstoffe, die bei den bisherigen Aufbereitungsstufen nicht herausgetrennt werden konnten.

Die schweren Stoffe sinken in dem Luftstrom frühzeitig zu Boden und werden bei 31 aus dem Windsichter ausgetragen. Die leichteren Kunststoffe erreichen das zweite Ende des Windsichters 30. Der körnige Anteil sammelt sich auf dem Schwingungssieb 34, wobei Körner mit einer Größe von weniger als 5 mm, insbesondere also das Inertstoffreiche Feingut , als Siebunterlauf abgesiebt und bei 31 ausgetragen werden. Der Siebüberlauf wird auf dem Schwingungssieb zu dem Kratzförderer 38 transportiert und dort aus dem Windsichter ausgetragen. Der Anteil aus Hohlkörpern, Folienteilen und dergl. wird von dem Luftstrom durch den Bypass-Schlauch (Windkanal) 35 in den mittleren Abschnitt des Kratzförderers 38 getragen. Dadurch wird der Eingangsbereich des Kratzförderers 38 entlastet, und es werden Verstopfungen sowie Staubentwicklung vermieden.

Weiteres zu der Funktionsweise eines Windsichters wird unten anhand der Fig. 4 erläutert.

In dem Kratzförderer 38 wird das aufzubereitende Material mit der Kratzkette 39 in den Puffersilo 40 gefördert. In dem Puffersilo 40 wird das Material mit Hilfe der vertikalen Schnecke 45 umgewälzt, um Brükkenbildung zu vermeiden und das körnige Material zu homogonisieren. Das Puffersilo 40 dient ferner der Steuerung der Materialzufuhr in den Agglomerator 50. Durch Pufferung des diskontinuierlichen Materialflusses in den Puffersilo können definierte Mengen des aufzubereitenden Materials in den Agglomerator 50 eingegeben werden.

In dem Agglomerator 50 wird das Kunststoffgut angeschmolzen, woraufhin der Agglomerationsprozeß einsetzt. Dann wird das Material schlagartig abgekühlt. Ziel der Agglomeration ist es, die Haufwerksparameter des aufzubereitenden Materials so zu beeinflussen, daß die Korngrößenverteilung gleichmäßiger, die Kornform einheitlicher und die Schüttdichte erhöht wird. Bei den im Hausmüll überwiegend enthaltenen nicht-massiven Kunststoffbestandteilen, wie Folien, Behältern etc., führt das Agglomerieren zu einer kompakteren Form geringerer Größe. Insgesamt soll ein einheitliches, rieselfähiges Granulat erzeugt werden, das sich einfach fördern, dosieren und weiterverwerten läßt.

Von besonderer Bedeutung ist bei dem erfindungsgemäßen Verfahren, daß beim Agglomerieren als flüchtige Stoffe, neben Wasserdampf, auch Asche und Papier durch die Absaugvorrichtungen 55 abgesaugt werden. Dadurch wird die Konzentration dieser Störstoffe in dem Agglomerat erheblich vermindert.

Das agglomerierte Material wird in der Trokkenstrecke 60 thermisch auf die gewünschte Restfeuchte (üblicherweise unterhalb 1 %) getrocknet. Während des Trockenvorganges wird mit einem Trommelsieb der reinkornanteil des agglomerierten Materiales (Körner mit einer Größe von weniger als 1.6 mm) abgesiebt.

Experimentelle Untersuchungen haben gezeigt, daß dieser Feinkornanteil einen großen Teil des im agglomerierten Material enthaltenen Papieres, der Asche und anderer vergleichbarer Stoffe enthält. Durch die Absiebung des Feinkornanteils läßt sich daher die Konzentration dieser Stoffe in dem Agglomerat noch einmal wesentlich verringern. Durch das Absaugen flüchtiger Stoffe beim Agglomerieren und das anschließende Absieben des Feinkornanteils werden in dem Agglomerat die geforderten Aschehöchstwertgrenzen deutlich unterschritten.

Nach dem Absieben des Feinkornteils wird mit dem Stangensieb 70 der Grobkornanteil (Körner mit einer Größe von mehr als 20 mm) aus dem Agglomerat abgesiebt. Durch die aufeinanderfolgende Absiebung zunächst des Feinkorn- und dann des Grobkornanteils verbleibt in dem Aufbereitungsprozeß ein Kunststoff-Agglomerat mit einer Korngröße zwischen 1.6 mm und 20 mm. Dieses Haufwerk zeichnet sich insbesondere durch einen geringen Gehalt an Störstoffen aus und ist daher besonders gut für die weitere Verwertung geeignet.

Das Haufwerk wird in dem Schwingungssieb 75 erneut gesiebt. Die Körner mit einer Größe von weniger als 8 mm bilden den Siebunterlauf und werden mit dem mechanischen Förderer 79 in das Lagersilo 100 gefördert. Dort werden sie für die weitere industrielle Verwertung bereit gehalten.

Die Körner mit einer Größe von mehr als 8 mm (Siebüberlauf) werden in den Wirbelstromabscheider 80 eingegeben. In diesem werden die nicht magnetischen Metalle aus dem Agglomerat enfernt. In dem Wirbelstromabscheider wird das Agglomerat einem wechselnden magnetischen Feld ausgesetzt, das von dem sich drehenden Polrad 81 erzeugt wird. Dadurch werden in den metallischen Körnern gemäß den Maxwellschen Gleichungen Wirbelströme induziert und die metallischen Körner dadurch magnetisiert. Dies ermöglicht die Abscheidung der Metalle.

Nach dem Abscheiden der nichtmagnetischen Metalle werden die Körner mit einer Größe von mehr als 8 mm in der von oben zu beschickenden Schneidmühle 90 zerkleinert. Wie in Figur 3 mit der gestrichelten Linie 99 angedeutet wird, wird das gemahlene Gut aus der Schneidmühle 90 wieder zu dem Schwingungssieb 75 gefördert, wo es erneut gesiebt wird. So wird sichergestellt, daß nur Körner mit einer Größe von weniger als 8 mm in das Lagersilo 100 gefördert werden.

In dem Lagersilo 100 wird das aufbereitete Agglomerat so lange gelagert, bis es zur weiteren Verwertung abgeholt wird. Dabei kann vorgesehen sein, daß das aufbereitete Agglomerat bei der Entnahme aus dem Lagersilo 100 noch einmal auf verbliebene ferromagnetische Stoffe, insbesondere Eisen- und Stahlteile, untersucht wird, z. B. mit einem Magnetabscheider.

Weiterhin ist vorgesehen, daß die aus dem aufzubereitenden Gut herausgetrennten Stoffe, insbesondere ferromagnetische Stoffe, Inertstoffe (Glas, Sand etc.), schwere Kunststoffteile, der Fein- und Überkornanteil des Kunststoffagglomerates und die nichtmagnetischen Metalle, jeweils separat verwertet werden.

Die vorbeschriebene Anlage ermöglicht die Aufbereitung von Kunststoffmüllgemischen, insbesondere von thermoplastischen Kunststoffen aus der Haushaltssammlung des Dualen Systems Deutschland, in einem reinen Trockenverfahren. Bei dieser Aufbereitung wird die Konzentration an Störstoffen, insbesondere Metallen, Asche, Papier, Sand und Glassplittern soweit herabgesetzt, daß beispielsweise die Weiterverwertung des Agglomerates in Extrudern ohne weiteres möglich ist. Auch die Korngröße und die Schüttdichte des Agglomerates liegen in den vorgegebenen Grenzen.

Zusammenfassend wird durch das oben beschriebene Verfahren ein rieselfähiges Kompaktat erzeugt, das die für die stoffliche Verwertung erforderliche Güte aufweist. Dabei kommen keine nassen Reinigungsstufen zum Einsatz, so daß die sehr aufwendigen und energiefressenden Trockenstufen für nasse Kunststoffe entfallen können. Weitere Energieeinsparung läßt sich dadurch erreichen, daß die Anlage mit einer Kraftund Wärmekopplung betrieben wird.

Fig. 4 zeigt eine detaillierte Prinzip-Skizze einer bevorzugten Ausführungsform des Windsichters.

Das aufzubereitende Material wird in diesen Windsichter 130 von oben durch die Aufgabe 131 eingegeben und dann von dem durch das Gebläse 132 erzeugten Luftstrom an dem Magneten 133 (sog. "Polizeimagnet" zum Aufspüren und Entfernen noch im Material enthaltener magnetischer Bestandteile) vorbei in Richtung der Leitbleche 134, 135 geführt. Das Windleitblech 134 und die verstellbaren Leitbleche 135 dienen zur Führung des Luftstroms und aufzubereitenden Materials in die Vibrationsrinne 136. Dabei sinken schwere Partikel fühzeitig zu Boden und gelangen zu dem Ausgabeschacht für die Schwerfraktion 138. Das leichtere Material gelangt hingegen in die Vibrationsrinne 136.

Die Vibrationsrinne 136 wird durch den Federantrieb 140 in Schwingungen versetzt. Im hinteren Bereich der Vibrationsrinne sammelt sich der körnige Anteil des aufzubereitenden Materials auf dem als Siebstrecke ausgelegten Bodenabschnitt 137. Die Öffnungen der Siebstrecke 137 sind so dimensioniert, daß Körner mit einer Größe von weniger als 5 mm als Siebunterlauf in den Ausgabeschacht 138 gelangen. Die größeren Körner bilden den Siebüberlauf und werden mit Hilfe des Kratzkettenförderers 141 aus dem Windsichter 130 entnommen.

Die Vibrationsrinne 136 ist mit dem Kratzkettenföderer 141 außerdem durch den Windkanal 139 verbunden. Durch diesen werden Folienteile und andere besonders leichte Bestandteile direkt in den mittleren Bereich des Kratzkettenförderers 138 geblasen.

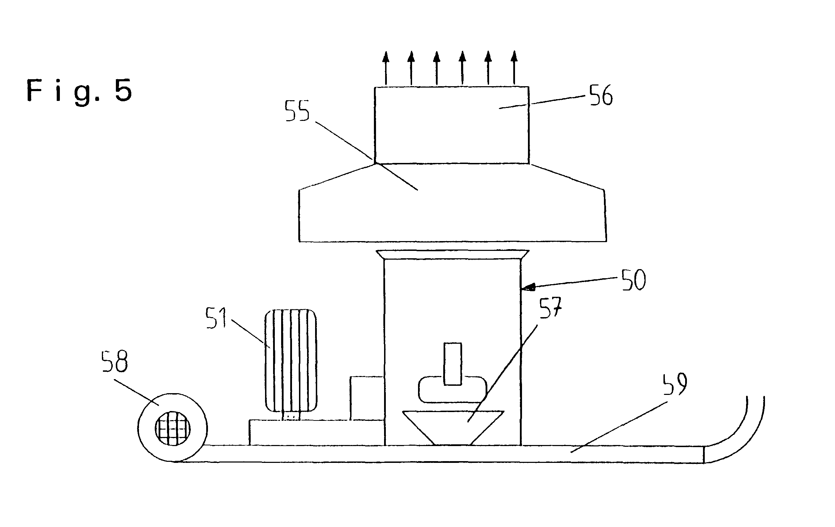

In Fig. 5 ist eine bevorzugtes Ausführungsbeispiel des Agglomerators 50 mit einem Antriebsmotor 51 dargestellt. Der Agglomerationsprozeß läuft darin in an und für sich bekannter Weise durch Anschmelzen und anschließendes Abkühlen des aufzubereitenden Materials ab. Von besonderer Bedeutung ist vorliegend die Absaugglocke 55, mit der während des Agglomerierens als flüchtige Stoffe, neben Wasserdampf, auch Asche und Papier abgesaugt werden. Durch den Ausgang 56 gelangen diese Stoffe in eine geeignete Reinigungsvorrichtung. Durch das Absaugen flüchtiger Stoffe wird der Gehalt an Störstoffen in dem beim Agglomerieren entstehenden Kunststoff-Haufwerk entscheidend reduziert.

In dem Agglomerator 50 ist ferner einen Aufgabetrichter 57 angeordnet. Durch diesen gelangt das beim Agglomerieren entstandene Kunststoff-Haufwerk in die pneumatische Förderstrecke 59, wo es durch den von dem Ventilator 58 erzeugten Luftstrom weitergegeleitet und getrocknet wird.

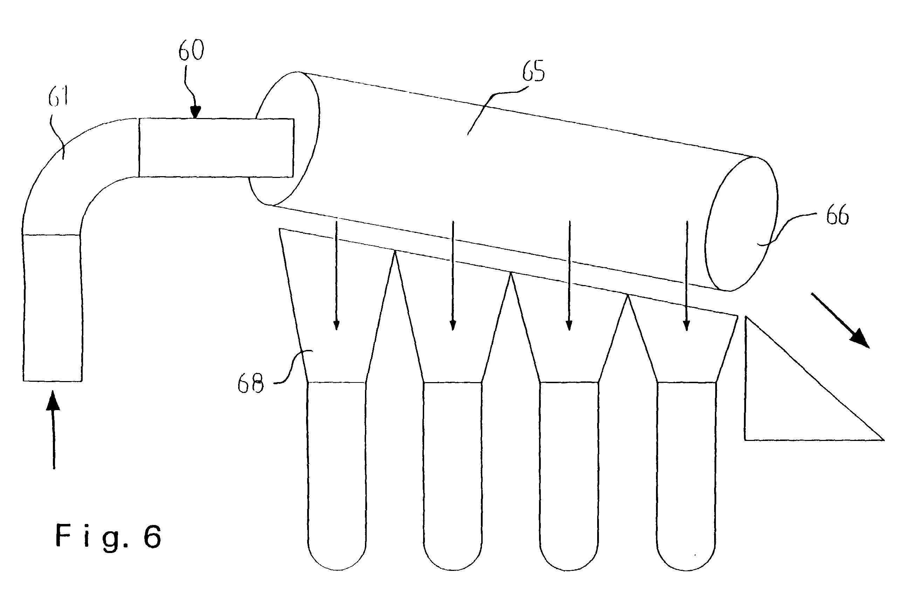

Fig. 6 zeigt schließlich ein bevorzugtes Ausführungsbeispiel einer Trockenstrecke 60, bei der eine pneumatische Förderstrecke 61 mit einem Feinkornsieb 65 für das agglomerierte Material verfahrenstechnisch kombiniert ist.

In der pneumatischen Förderstrecke 61 wird das agglomerierte Material zu dem Trommelsieb 65 geleitet und dabei getrocknet. Das Material durchläuft das sich drehende Trommelsieb 65, dessen Siebwände einen solchen Durchmesser haben, daß Partikel mit einer Größe von weniger als 1.6 mm als Siebunterlauf in die Aufnahmebehälter 68 gelangen. Der Siebüberlauf wird bei dem Austrag 66 entnommen und gelangt zur nächsten Aufbereitungsstufe.

Wenn das Feinkornsieb 65 unmittelbar hinter dem Agglomerator 50 angeordnet ist, dann ist die pneumatische Förderstrecke 61 die Fortsetzung der in Fig. 5 gezeigten pneumatischen Förderstrecke 59, in der das Material aus dem Agglomerator 50 entnommen wird.

## Patentansprüche

1. Verfahren zur trockenen Aufbereitung von Mischkunststoffen, insbesondere von gemischten Kunststoffen aus dem Hausmüll, bei dem das aufzubereitende Material in einer Zerkleinerungsstufe zunächst zerkleinert wird, magnetische Stoffe aus dem zerkleinerten Material entfernt werden und das zerkleinerte Material thermisch agglomeriert oder unter Druck kompaktiert, also preß-agglomeriert wird, **dadurch gekennzeichnet, daß**
a) während des Agglomerierens als flüchtige Stoffe, neben Wasserdampf, auch Asche und Papier durch Absaugvorrichtungen (55) abgesaugt werden,
b) das agglomerierte Material anschließend auf eine gewünschte Restfeuchte getrocknet wird und
c) das agglomerierte Material gesiebt wird.

2. Verfahren nach Anspruch 1, **dadurch gekennzeichnet, daß** mit einem Feinkornsieb (65) der Feinkornanteil aus dem agglomerierten Material abgesiebt wird.

3. Verfahren nach Anspruch 1 oder 2, **dadurch gekennzeichnet, daß** mit einem Grobkomsieb (70) grobe Körner aus dem agglomerierten Material abgesiebt werden.

4. Verfahren nach mindestens einem der vorangehenden Ansprüche, **dadurch gekennzeichnet, daß** das aufzubereitende Material in der Zerkleinerungsstufe mit einem Schneidwalzenzerkleinerer wie einem Shredder (10) zerkleinert wird.

5. Verfahren nach Anspruch 4, **dadurch gekennzeichnet, daß** das aufzubereitende Material in dem Shredder (10) auf eine Größe von 30 mm bis 100 mm, vorzugsweise 50 mm, zerkleinert wird.

6. Verfahren nach Anspruch 4 oder 5, **dadurch gekennzeichnet, daß** zur Erhöhung des Materialdurchsatzes in der Zerkleinerungsstufe mehrere Shredder (10) parallel betrieben werden.

7. Verfahren nach einem der Ansprüche 4 bis 6, **dadurch gekennzeichnet, daß** das aufzubereitende Material vor der Eingabe in dem Shredder (10) vorzerkleinert und daß das vorzerkleinerte Material mit einem Stopfwerk (12) in den Shredder (10) gestopft wird.

8. Verfahren nach Anspruch 7, **dadurch gekennzeichnet, daß** nach der Vorzerkleinerung solche Bestandteile des aufzubereitenden Materials, die ein bestimmtes, vorgegebenes Gewicht überschreiten, aussortiert werden, indem das vorzerkleinerte Material über eine Klappvorrichtung geführt wird, deren Mechanismus in Abhängigkeit von dem auf ihr lastenden Gewicht ausgelöst wird.

9. Verfahren nach Anspruch 7 oder 8, **dadurch gekennzeichnet, daß** nach der Vorzerkleinerung mit einem Magnetabscheider magnetische Stoffe aus dem aufzubereitenden Material entfernt werden, bevor das aufzubereitende Material in die Zerkleinerungsstufe (10, 11, 12) gegeben wird.

10. Verfahren nach einem der vorangehenden Ansprüche, **dadurch gekennzeichnet, daß** nach der Zerkleinerung des aufzubereitenden Materials in der Zerkleinerungsstufe (10, 11, 12) die magnetischen Stoffe mit einem Magnetabscheider, vorzugsweise einem Überbandmagneten (15), abgeschieden werden.

11. Verfahren nach einem der vorangehenden Ansprüche, **dadurch gekennzeichnet, daß** das zerkleinerte Material in einem Drehrohrtrockner (20) thermisch getrocknet wird.

12. Verfahren nach einem der vorangehenden Ansprüche, **dadurch gekennzeichnet, daß** das aufzubereitende Material in einen Windsichter (30) eingeblasen wird, in dem Stoffe, die eine bestimmte, vorgebbare Massendichte überschreiten, aus dem zerkleinerten Material aussortiert werden.

13. Verfahren nach Anspruch 12, **dadurch gekennzeichnet, daß** der körnige Anteil des aufzubereitenden Leichtgutes mit einem mechanischen Förderer (38) aus dem Windsichter (30) entnommen wird und daß Folienteile und dergleichen durch einen Windkanal (Bypass-Schlauch, 35) aus dem Windsichter (30) in den mittleren Abschnitt des mechanischen Förderers (38) geführt werden.

14. Verfahren nach einem der vorangehenden Ansprüche, **dadurch gekennzeichnet, daß** aus dem zerkleinerten und von magnetischen Stoffen befreiten Material Inertstoffe entfernt werden, indem das Material von einem mit einem Siebboden (34) versehenen mechanischen Förderer transportiert wird.

15. Verfahren nach Anspruch 14, **dadurch gekennzeichnet, daß** auf der Siebstrecke (34) Körner mit einer Größe von weniger als 5 mm aus dem aufzubereitenden Material abgesiebt werden.

16. Verfahren nach einem der vorangehenden Ansprüche, **dadurch gekennzeichnet, daß** das aufzubereitende Material vor der Eingabe in den Agglomerator (50) in einem Puffersilo (40) durch Umwälzung homogenisiert wird.

17. Verfahren nach einem der vorangehenden Ansprüche, **dadurch gekennzeichnet, daß** das aufzubereitende Material in dem Agglomerator (50) zunächst angeschmolzen und dann schlagartig abgekühlt wird (thermisches Agglomerieren).

18. Verfahren nach einem der vorangehenden Ansprüche, **dadurch gekennzeichnet, daß** das agglomerierte Material auf einer Trockenstrecke (60, 61) auf eine bestimmte, vorgegebene Restfeuchte getrocknet wird, und daß der Feinkornanteil des agglomerierten Materials mit einem Trommelsieb (65) abgesiebt wird.

19. Verfahren nach Anspruch 18, **dadurch gekennzeichnet, daß** die Trocknung auf einer pneumatischen Förderstrecke (61) erfolgt.

20. Verfahren nach einem der vorangehenden Ansprüche, **dadurch gekennzeichnet, daß** das agglomerierte Material auf eine Restfeuchte von weniger als 1 % getrocknet wird.

21. Verfahren nach einem der vorangehenden Ansprüche, **dadurch gekennzeichnet, daß** die Feinkörner mit einer Größe unterhalb von 1 mm bis 2 mm, vorzugsweise unterhalb von 1,6 mm, aus dem agglomerierten Material abgesiebt werden.

22. Verfahren nach einem der vorangehenden Ansprüche, **dadurch gekennzeichnet, daß** grobe Körner und Flusen mit einem Stangensieb (70) aus dem agglomerierten Material abgesiebt werden.

23. Verfahren nach einem der vorangehenden Ansprüche, **dadurch gekennzeichnet, daß** zur Absiebung des Grobkornanteils die Körner mit einer Größe von mehr als 20 mm aus dem agglomerierten Material entfernt werden.

24. Verfahren nach einem der vorangehenden Ansprüche, **dadurch gekennzeichnet, daß** aus dem agglomerierten Material die nichtmagnetischen Metalle (NE-Metalle) mit einem Wirbelstromabscheider (80) herausgetrennt werden.

25. Verfahren nach einem der vorangehenden Ansprüche, **dadurch gekennzeichnet, daß** der Überkornanteil des im Prozeß verbliebenen Materials, insbesondere Körner mit einer Größe von mehr als 8 mm, mit einem bewegten Sieb (75) ausgesiebt und mit einer Schneidmühle (90) erneut zerkleinert wird.

26. Verfahren nach einem der vorangehenden Ansprüche, **dadurch gekennzeichnet, daß** die Mischkunststoffe in folgenden Schritten aufbereitet werden:
a) Zerkleinern der Mischkunststoffe mit einem Shredder (10), vorzugsweise auf eine Größe von 50 mm bis 65 mm;
b) Abscheiden magnetischer Materialien mit einem Magnetabscheider (15);
c) thermisches Trocknen des aufzubereitenden Materials in einem Drehrohrtrockner (20);
d) Absieben des Feinkornanteils mit einer Größe von weniger als 5 mm bis 10 mm, vorzugsweise weniger als 7 mm, mit einem Trommelsieb;
e) Abscheiden von Schwergut mit einem Windsichter (30);
f) Absieben des Feinkornanteils mit einer Größe von weniger als 3 mm bis 7 mm, vorzugsweise weniger als 5 mm, auf einer Siebstrecke (34);
g) Lagerung und Homogenisierung des aufzubereitenden Materials in einem Puffersilo (40);
h) Agglomerieren des aufzubereitenden Materials in einem Agglomerator (50), wobei als flüchtige Stoffe neben Wasserdampf auch Asche und Papier mit Hilfe von Absaugvorrichtungen (55) abgesaugt werden;
i) Trocknen des agglomerierten Materials auf einer Trockenstrecke (60, 61);
j) Absieben des Feinkornanteils, mit einer Größe von weniger als 1 mm bis 2 mm, vorzugsweise weniger als 1,6 mm, mit einem Trommelsieb (65);
k) Absieben des Grobkornanteils mit einer Größe von mehr als 15 bis 30 mm, vorzugsweise mehr als 20 mm, mit einem Stangensieb (70);
l) Absieben der Körner mit einer Korngröße von mehr als 5 bis 10 mm, vorzugsweise mehr als 8 mm, mit einem Schwingungssieb (75), wobei die größeren Körner den Siebüberlauf und die kleineren den Siebunterlauf bilden;
m) Fördern des Siebunterlaufs aus Schritt 1) in ein Lagersilo (100);
n) Abscheiden nichtmagnetischer Metalle aus dem Siebüberlauf von Schritt l) mit einem Wirbelstromabscheider (80), Zerkleinern des Siebüberlaufs mit einer Schneidmühle (90) und erneutes Aufgeben des zerkleinerten Materials auf das Schwingungssieb (75).

27. Verfahren nach einem der vorangehenden Ansprüche, **dadurch gekennzeichnet, daß** die aus dem aufzubereitenden Material entfernten Stoffe, insbesondere die magnetischen und die nicht magnetischen Metalle, die Intertstoffe, die schweren Kunststoffe sowie der abgesiebte Feinkorn- und Überkornanteil, zur weiteren Verwertung jeweils getrennt gelagert werden.

28. Verfahren nach einem der Ansprüche 12 bis 27, **dadurch gekennzeichnet, daß** von dem zerkleinerten Material zur Erhöhung des Materialdurchsatzes mehrere Windsichter (30) und/oder Siebstrecken (34) parallel durchlaufen werden.

29. Verfahren nach einem der vorangehenden Ansprüche, **dadurch gekennzeichnet, daß** die zum Betrieb der Aufbereitungsanlage erforderliche Energie, insbesondere die zur Trocknung erforderliche Energie, durch Kraft- und Wärmekopplung erzeugt wird.

30. Anlage zur trockenen Aufbereitung von Mischkunststoffen, insbesondere zur Durchführung des Verfahrens nach einem der vorangehenden Ansprüche, mit einer Zerkleinerungsstufe (10, 11, 12), einem Magnetabscheider (15) und einem Agglomerator (50) für das zerkleinerte Material, **gekennzeichnet durch** Absaugvorrichtungen (55) zum Absaugen von Wasserdampf, Asche und Papier als flüchtigen Stoffen während des Agglomerierens, eine Trockenstrecke (60) für das agglomerierte Material und ein Feinkornsieb (65) zum Absieben des Feinkornanteils aus dem agglomerierten Material.

31. Anlage nach Anspruch 30, **gekennzeichnet durch** ein dem Agglomerator (50) nachgeschaltetes Grobkornsieb (70) zum Absieben des Überkornanteils des agglomerierten Materials.

32. Anlage nach Anspruch 30 oder 31, **gekennzeichnet durch** einen der Zerkleinerungsstoffe (10, 11, 12) nachgeschalteten Windsichter (30) zum Abtrennen von Schwergut aus dem zerkleinerten Material.

33. Anlage nach Anspruch 32, **dadurch gekennzeichnet, daß** der Windsichter (30) in seinem hinteren, von dem Gebläse (32) abgewandten Abschnitt eine Siebstrecke (34), insbesondere ein Schwingungssieb, aufweist, welche im wesentlichen parallel zum Luftstrom aus dem Gebläse (32) angeordnet ist, wodurch der hintere Abschnitt des Windsichters (30) in einen oberen und einen unteren Bereich unterteilt wird, daß angrenzend an diesen unteren Bereich ein Kratzförderer (38) angeordnet ist und daß ein Windkanal (35) jenen oberen Bereich mit dem mittleren Abschnitt des Kratzförderers (38) verbindet.

34. Anlage nach einem der Ansprüche 30 bis 33, **gekennzeichnet durch** ein Puffersilo (40), das eine vertikale Schnecke (45) zum Umwälzen des gelagerten Gutes aufweist und dessen Austrag mit dem Agglomerator (50) verbunden ist.

35. Anlage nach einem der Ansprüche 30 bis 34, **dadurch gekennzeichnet, daß** das Feinkomsieb zum Absieben des Feinkornanteils aus dem agglomerierten Material als Trommelsieb (65) ausgebildet und in der Trockenstrecke (60) zum Trocknen des agglomerierten Materials angeordnet ist.

36. Anlage nach einem der Ansprüche 30 bis 35, **gekennzeichnet durch** einen dem Agglomerator (50) und der Trockenstrecke (60) nachgeschalteten Wirbelstromabscheider (80).

37. Anlage nach einem der Ansprüche 30 bis 36, **gekennzeichnet durch** die nachfolgend aufgeführten, **durch** Transportmittel miteinander verbundenen Anlagenteile, und zwar
a) einen Shredder (10) mit einem Stopfwerk (12), dessen Austrag mit der Aufgabe eines Drehrohrtrockners (20) verbunden ist;
b) einen hinter dem Shredder (10) angeordneten Überbandmagneten (15);
c) einen Drehrohrtrockner (20), dessen Wandung (22) mit Sieblöchern versehen ist und dessen Austrag mit der Aufgabe (29) eines Windsichters (30) verbunden ist;
d) einen Windsichter (30), dessen Leichtgutaustrag mit dem Einlauf eines Puffersilos (40) verbunden ist;
e) ein Puffersilo (40), das eine vertikale Schnecke (45) aufweist und dessen Austrag mit einem Agglomerator (50) verbunden ist;
f) einen Agglomerator (50), der Absaugvorrichtungen (55) zum Absaugen von Wasserdampf, Asche und Papier als flüchtige Stoffe während des Agglomerierens aufweist und dessen Austrag mit einer Trockenstrecke (60) verbunden ist;
g) eine Trockenstrecke (60), in der ein Trommelsieb (65) zum Absieben des Feinkornanteils des agglomerierten Materials angeordnet ist und die zu einem Stangensieb (70) führt;
h) ein Stangensieb (70), dessen Siebunterlauf-Austrag mit einem Schwingsieb (75) verbunden ist;
i) ein Schwingsieb (75), dessen Siebunterlauf-Austrag mit einem Lagersilo (100) verbunden ist und dessen Siebüberlauf-Austrag mit einem Wirbelstromabscheider (80) verbunden ist;
j) ein Wirbelstromabscheider (80), dessen Nichtmetall-Austrag mit einer Schneidmühle (90) verbunden ist;
k) eine Schneidmühle (90), deren Austrag mit dem Schwingsieb (75) verbunden ist;
1) ein Lagersilo (100).

## Claims

1. A process for dry recovering mixed plastics, particularly mixed plastics from domestic garbage, wherein initially, the material to be recovered is crushed in a crushing stage, magnetic matter is removed from the crushed material and the crushed material is agglomerated thermally or compacted under pressure, i.e. pressure-agglomerated, **characterized in that**
a) as volatile matter, further to water vapor, also ash and paper being exhausted by exhausters (55) during agglomeration,
b) the agglomerated material is then dried to a desired residual moisture, and
c) the agglomerated material is screened.

2. The process of claim 1, **characterized in that** the fine-grain fraction is screened from the agglomerated material using a fine-grain screen (65).

3. The process according to claim 1 or 2, **characterized in that** coarse grains are screened from the agglomerated material using a coarse-grain screen (70).

4. The process according to at least one of the preceding claims, **characterized in that** the material to be recovered is crushed in the crushing stage using a cutting roll crusher such as a shredder (10).

5. The process of claim 4, **characterized in that** the material to be recovered is crushed in the shredder (10) to a size of from 30 mm to 100 mm, preferably 50 mm.

6. The process according to claim 4 or 5, **characterized in that** multiple shredders (10) are operated in parallel in order to increase the material flow rate in the crushing stage.

7. The process according to one of claims 4 through 6, **characterized in that** the material to be recovered is pre-crushed prior to being fed into shredder (10), and the pre-crushed material is stuffed into shredder (10) using a stuffing unit (12).

8. The process of claim 7, **characterized in that** following pre-crushing, those components of the material to be recovered having a particular, specified weight are sorted out by passing the pre-crushed material over a hinged device, the mechanism of which being triggered depending on the weight resting thereon.

9. The process according to claim 7 or 8, **characterized in that** following pre-crushing, magnetic matter is removed from the material to be recovered using a magnetic separator prior to passing the material to be recovered into the crushing stage (10, 11, 12).

10. The process according to one of the preceding claims, **characterized in that** following crushing in the crushing stage (10, 11, 12) of the material to be recovered, magnetic matter is separated from the material to be recovered using a magnetic separator, preferably an overhead magnet (15).

11. The process according to one of the preceding claims, **characterized in that** the crushed material is dried thermally in a rotary-tube dryer (20).

12. The process according to one of the preceding claims, **characterized in that** the material to be recovered is injected into an air classifier (30) wherein matter exceeding a particular, specifiable mass density is sorted out from the crushed material.

13. The process of claim 12, **characterized in that** the grainy fraction of the light material to be recovered is removed from the air classifier (30) using a mechanical conveyor (38), and that foil fragments and the like are passed through an air duct (bypass tube 35) from the air classifier (30) into the middle section of the mechanical conveyor (38).

14. The process according to one of the preceding claims, **characterized in that** inert matter is removed from the crushed material freed from magnetic matter by transporting the material using a mechanical conveyor provided with a mesh bottom (34).

15. The process of claim 14, **characterized in that** along the screen section (34), grains having a size of less than 5 mm are screened out from the material to be recovered.

16. The process according to one of the preceding claims, **characterized in that** prior to feeding into the agglomerator (50), the material to be recovered is homogenized in a buffer tank (40) by circulation.

17. The process according to one of the preceding claims, **characterized in that** the material to be recovered is initially pre-melted in the agglomerator (50) and then cooled down abruptly (thermal agglomeration).

18. The process according to one of the preceding claims, **characterized in that** the agglomerated material is dried to a particular, specified residual moisture on a drying section (60, 61), and the fine-grain fraction of the agglomerated material is screened out using a drum screen (65).

19. The process of claim 18, **characterized in that** drying is effected on a pneumatic conveyor section (61).

20. The process according to one of the preceding claims, **characterized in that** the agglomerated material is dried to a residual moisture of less than 1%.

21. The process according to one of the preceding claims, **characterized in that** the fine grains having a size below from 1 mm to 2 mm, preferably below 1.6 mm, are screened out from the agglomerated material.

22. The process according to one of the preceding claims, **characterized in that** coarse grains and lints are screened out from the agglomerated material using a bar screen (70).

23. The process according to one of the preceding claims, **characterized in that** in order to screen out the coarse-grain fraction, grains having a size of more than 20 mm are removed from the agglomerated material.

24. The process according to one of the preceding claims, **characterized in that** non-magnetic metals (nonferrous metals) are separated from the agglomerated material using a vortex separator (80).

25. The process according to one of the preceding claims, **characterized in that** the oversize fraction of the material having remained in the process, particularly grains having a size of more than 8 mm, are screened out using a moving screen (75) and crushed again using a cutting mill (90).

26. The process according to one of the preceding claims, **characterized in that** the mixed plastics are recovered in the following steps:
a) crushing the mixed plastics to a size of preferably from 50 mm to 65 mm using a shredder (10);
b) separating magnetic materials using a magnetic separator (15);
c) thermal drying in a rotary-tube dryer (20) of the material to be recovered;
d) screening out the fine-grain fraction having a size of less than from 5 mm to 10 mm, preferably less than 7 mm, using a drum screen;
e) separating heavy materials using an air classifier (30);
f) screening out the fine-grain fraction having a size of less than from 3 mm to 7 mm, preferably less than 5 mm, on a screen section (34);
g) storing and homogenizing the material to be recovered in a buffer tank (40);
h) agglomerating the material to be recovered in an agglomerator (50), as volatile matter, further to water vapor also ash and paper being exhausted by means of exhausters (55);
i) drying the agglomerated material on a drying section (60, 61);
j) screening out the fine-grain fraction having a size of less than from 1 mm to 2 mm, preferably less than 1.6 mm, using a drum screen (65);
k) screening out the coarse-grain fraction having a size of more than from 15 to 30 mm, preferably more than 20 mm, using a bar screen (70);
1) screening out the grains having a grain size of more than from 5 to 10 mm, preferably more than 8 mm, using a vibrating screen (75), the larger grains forming the screen overflow and the smaller ones the screen underflow;
m) conveying the screen underflow from step 1) into a storage tank (100);
n) separating non-magnetic metals from the screen overflow of step 1) using a vortex separator (80), crushing the screen overflow using a cutting mill (90), and re-feeding the crushed material onto the vibrating screen (75).

27. The process according to one of the preceding claims, **characterized in that** matter removed from the material to be recovered, particularly the magnetic and non-magnetic metals, inert matter, heavy plastics, as well as the screened-out fine-grain and oversize fractions are each stored separately for further processing.

28. The process according to one of the preceding claims 12 through 27, **characterized in that** in order to increase the material flow rate, the crushed material passes multiple air classifiers (30) and/or screen sections (34) in parallel.

29. The process according to one of the preceding claims, **characterized in that** the energy required to operate the recovery plant, particularly the energy required for drying, is furnished by combined power and heat generation.

30. A plant for recovering mixed plastics, particularly for operating the process according to one of the preceding claims, having a crushing stage (10, 11, 12) and a magnetic separator (15), and an agglomerator (50) for the crushed material, **characterized by** exhausters (55) for exhausting water vapor, ash and paper as volatile matter during agglomeration, a drying section (60) for the agglomerated material, and a fine-grain screen (65) for screening out the fine-grain fraction from the agglomerated material.

31. The plant according to claim 30, **characterized by** a coarse-grain screen (70) arranged downstream with respect to the agglomerator (50), which is used to screen out the oversize fraction of the agglomerated material.

32. The plant according to claim 30 or 31, **characterized by** an air classifier (30) arranged downstream with respect to the crushing stage (10, 11, 12), which is used to separate heavy material from the crushed material.

33. The plant according to claim 32, **characterized in that** the air classifier (30) in its rear section facing away from the blower (32) has a screen section (34), particularly a vibrating screen, which is arranged substantially in parallel to the air stream from the blower (32), thereby dividing the rear section of the air classifier (30) into an upper and a lower zone, that a trough conveyor (38) is arranged adjacent to said lower zone, and an air duct (35) connects said upper zone with the middle section of trough conveyor (38).

34. The plant according to one of claims 30 through 33, **characterized by** a buffer tank (40) having a vertical screw (45) to circulate the stored material, the discharge of which being connected to agglomerator (50).

35. The plant according to one of claims 30 through 34, **characterized in that** the fine-grain screen for screening out the fine-grain fraction from the agglomerated material is designed as a drum screen (65) and arranged in the drying section (60) for drying the agglomerated material.

36. The plant according to one of claims 30 through 35, **characterized by** a vortex separator (80) arranged downstream with respect to the agglomerator (50) and the drying section (60).

37. The plant according to one of claims 30 through 36, **characterized by** the plant components indicated below which are interconnected by conveying means, the components being:
a) a shredder (10) having a stuffing unit (12), the discharge of which being connected to the feed of a rotary-tube dryer (20);
b) an overhead magnet (15) arranged behind shredder (10);
c) a rotary-tube dryer (20), the wall (22) of which being provided with sieve holes, and the discharge of which being connected to the feed (29) of an air classifier (30);
d) an air classifier (30), the light material discharge of which being connected to the feed of a buffer tank (40);
e) a buffer tank (40) having a vertical screw (45), the discharge of said tank being connected to an agglomerator (50);
f) an agglomerator (50) having exhausters (55) to exhaust water vapor, ash and paper as volatile matter during agglomeration, the discharge of said agglomerator being connected to a drying section (60);
g) a drying section (60) wherein a drum screen (65) for screening out the fine-grain fraction of the agglomerated material is arranged, which drying section leads to a bar screen (70);
h) a bar screen (70), the screen underflow discharge of which being connected to a vibrating screen (75);
i) a vibrating screen (75), the screen underflow discharge of which being connected to a storage tank (100), and the screen overflow discharge of which being connected to a vortex separator (80);
j) a vortex separator (80), the non-metal discharge of which being connected to a cutting mill (90);
k) a cutting mill (90), the discharge of which being connected to the vibrating screen (75);
l) a storage tank (100).

## Revendications

1. Procédé pour la préparation sèche de matières plastiques mélangées, en particulier de matières plastiques mélangées provenant d'ordures ménagères, dans lequel le matériau à préparer est tout d'abord déchiqueté dans une étape de déchiquetage, les matières magnétiques sont enlevées du matériau déchiqueté, et le matériau déchiqueté est aggloméré thermiquement ou commpacté sous pression, c'est-à-dire aggloméré à la presse,
a) comme des matières volatiles, en plus de la vapeur d'eau, aussi les cendres et le papier étant aspirées par des dispositifs d'aspiration (55) pendant l'agglomération,
b) par la suite, le matériau aggloméré est séché jusqu'à une humidité residuelle désirée et
**caractérisé en ce que**
c) le matériau aggloméré est tamisé.

2. Procédé selon la revendication 1, **caractérisé en ce que** la fraction granulométrique fine du matériau aggloméré est tamisée à l'aide d'un tamis (65) pour grains fins.

3. Procédé selon les revendications 1 ou 2, **caractérisé en ce que** les grains grossiers du matériau aggloméré sont tamisés à l'aide d'un tamis (70) pour grains grossiers.

4. Procédé selon au moins l'une des revendications précédentes, **caractérisé en ce que** dans l'étape de déchiquetage, le matériau à préparer est déchiqueté à l'aide d'une déchiqueteuse à cylindres de coupe, par exemple une déchiqueteuse (10).

5. Procédé selon la revendication 4, **caractérisé en ce que** dans la déchiqueteuse (10), le matériau à préparer est déchiqueté à une taille de 30 mm à 100 mm, et de préférence de 50 mm.

6. Procédé selon les revendications 4 ou 5, **caractérisé en ce que** pour augmenter le débit de matériau dans l'étape de déchiquetage, on utilise plusieurs déchiqueteuses (10) en parallèle.

7. Procédé selon l'une quelconque des revendications 4 à 6, **caractérisé en ce qu'**avant d'être introduit dans la déchiqueteuse (10), le matériau à préparer est prédéchiqueté, et **en ce que** le matériau prédéchiqueté est compacté dans la déchiqueteuse (10) à l'aide d'un mécanisme de compactage (12).

8. Procédé selon la revendication 7, **caractérisé en ce qu'**après le prédéchiquetage, les composants du matériau à préparer qui dépassent un poids défini prédéterminé sont triés en amenant le matériau prédéchiqueté sur un dispositif à clapet dont le mécanisme se déclenche en fonction du poids qui y est chargé.

9. Procédé selon les revendications 7 ou 8, **caractérisé en ce qu'**après le prédéchiquetage, les matières magnétiques sont enlevées du matériau à préparer à l'aide d'un séparateur magnétique, avant que le matériau à préparer soit introduit dans l'étape de déchiquetage (10, 11, 12).

10. Procédé selon l'une des revendications précédentes, **caractérisé en ce qu'**après le déchiquetage du matériau à préparer dans l'étape de déchiquetage (10, 11, 12), les matières magnétiques sont séparées à l'aide d'un séparateur magnétique, de préférence un aimant (15) disposé au-dessus d'une bande.

11. Procédé selon l'une des revendications précédentes, **caractérisé en ce que** le matériau déchiqueté est séché thermiquement dans un séchoir tubulaire rotatif (20).

12. Procédé selon l'une des revendications précédentes, **caractérisé en ce que** le matériau préparé est soufflé dans un aéroséparateur (30) dans lequel les matières qui dépassent une densité définie prédéterminablé sont séparées du matériau déchiqueté.

13. Procédé selon la revendication 12, **caractérisé en ce que** la fraction granulée du produit léger à préparer est reprise de l'aéroséparateur (30) à l'aide d'un transporteur mécanique (38), et la fraction en feuilles et similaires est amenée dans la partie centrale du transporteur mécanique (38) par un canal aéraulique (conduit de dérivation, 35) partant de l'aéroséparateur (30).

14. Procédé selon l'une des revendications précédentes, **caractérisé en ce que** les matières inertes sont enlevées du matériau déchiqueté débarrassé de ses matières magnétiques en transportant le matériau par un transporteur mécanique doté d'un tamis de fond (34).

15. Procédé selon la revendication 14, **caractérisé en ce que**, par tamisage sur le parcours de tamisage (34), les granulés d'une taille inférieure à 5 mm sont extraits du matériau à préparer.

16. Procédé selon l'une des revendications précédentes, **caractérisé en ce qu'**avant d'être introduit dans l'agglomérateur (50), le matériau à préparer est homogénéisé en étant mis en rotation dans un silo-tampon (40).

17. Procédé selon l'une des revendications précédentes, **caractérisé en ce que** le matériau à préparer est tout d'abord fondu dans l'agglomérateur (50) et ensuite brusquement refroidi (agglomération thermique).

18. Procédé selon l'une des revendications précédentes, **caractérisé en ce que** le matériau aggloméré est séché sur un parcours de séchage (60, 61) jusqu'à une humidité résiduelle définie prédéterminée, et **en ce que** la fraction granulométrique fine du matériau aggloméré est séparée par tamisage à l'aide d'un tambour tamiseur (65).

19. Procédé selon la revendication 18, **caractérisé en ce que** le séchage s'effectue sur un parcours de transport pneumatique (61).

20. Procédé selon l'une des revendications précédentes, **caractérisé en ce que** le matériau aggloméré est séché jusqu'à une humidité résiduelle inférieure à 1%.

21. Procédé selon l'une des revendications précédentes, **caractérisé en ce que** les grains fins d'une taille inférieure à 1 mm à 2 mm, de préférence inférieure à 1,6 mm, sont séparés du matériau aggloméré par tamisage.

22. Procédé selon l'une des revendications précédentes, **caractérisé en ce que** les grains grossiers et les peluches sont séparés du matériau aggloméré à l'aide d'un crible à barreaux (70).

23. Procédé selon l'une des revendications précédentes, **caractérisé en ce que** pour séparer la fraction granulométrique grossière par tamisage, les granulés d'une taille supérieure à 20 mm sont enlevés du matériau aggloméré.

24. Procédé selon l'une des revendications précédentes, **caractérisé en ce que** les métaux non magnétiques (métaux non ferreux) sont séparés du matériau aggloméré à l'aide d'un séparateur à écoulement tourbillonnaire (80).

25. Procédé selon l'une des revendications précédentes, **caractérisé en ce que** la fraction granulométrique supérieure du matériau restant dans le processus, en particulier les granulés d'une taille supérieure à 8 mm, sont séparés par tamisage à l'aide d'un tamis mobile (75) et sont à nouveau déchiquetés à l'aide d'un broyeur à lames (90).

26. Procédé selon l'une des revendications précédentes, **caractérisé en ce que** les plastiques mélangés sont préparés par les étapes ci-dessous:
a) déchiquetage des plastiques mélangés à l'aide d'une déchiqueteuse (10), de préférence à une taille de 50 mm à 65 mm;
b) séparation des matériaux magnétiques à l'aide d'un séparateur magnétique (15);
c) séchage thermique du matériau à préparer dans un séchoir tubulaire rotatif (20);
d) séparation de la fraction granulométrique fine d'une taille inférieure à 5 mm à 10 mm, de préférence inférieure à 7 mm, par tamisage à l'aide d'un tambour tamiseur;
e) séparation des matières lourdes à l'aide d'un aéroséparateur (30);
f) séparation de la fraction granulométrique fine d'une taille inférieure à 3 mm à 7 mm, de préférence inférieure à 5 mm, par tamisage sur un parcours de tamisage (34);
g) entreposage et homogénéisation du matériau à préparer dans un silo-tampon (40);
h) agglomération du matériau à préparer dans un agglomérateur (50), en plus de la vapeur d'eau, aussi les cendres et le papier commedes matières volatiles étant aspirées à l'aide de dispositifs d'aspiration (55) ;
i) séchage du matériau aggloméré sur un parcours de séchage (60, 61);
j) séparation de la fraction granulométrique fine d'une taille inférieure à 1 mm à 2 mm, de préférence inférieure à 1,6 mm, par tamisage à l'aide d'un tambour tamiseur (65);
k) séparation de la fraction granulométrique grossière d'une taille supérieure à 15 à 30 mm, de préférence supérieure à 20 mm, par tamisage à l'aide d'un crible à barreaux (70);
l) séparation des grains d'une taille supérieure à 5 à 10 mm, de préférence supérieure à 8 mm, par tamisage à l'aide d'un tamis oscillant (75), les grains grossiers formant le refus du tamisage et les petits grains le passant de tamisage;
m) transport du passant de tamisage provenant de l'étape I) dans un silo d'entreposage (100);
n) séparation des métaux non magnétiques présents dans le refus de tamisage de l'étape I) à l'aide d'un séparateur à écoulement tourbillonnaire (80), déchiquetage du refus de tamisage à l'aide d'un broyeur à lames (90) et nouvelle introduction du matériau déchiqueté sur le tamis oscillant (75).

27. Procédé selon l'une des revendications précédentes, **caractérisé en ce que** les matières extraites du matériau à préparer, en particulier les métaux magnétiques et les métaux non magnétiques, les matières inertes, les matières synthétiques lourdes ainsi que la fraction granulométrique fine et la fraction granulométrique supérieure séparées par tamisage, sont entreposées séparément en vue de la poursuite de leur valorisation.

28. Procédé selon l'une des revendications 12 à 27, **caractérisé en ce que** pour augmenter le débit de matériau, le matériau déchiqueté traverse en parallèle plusieurs aéroséparateurs (30) et/ou parcours de tamisage (34).

29. Procédé selon l'une des revendications précédentes, **caractérisé en ce que** l'énergie nécessaire pour l'exploitation de l'installation de préparation, et en particulier l'énergie nécessaire pour le séchage, est créée par production combinée de chaleur et d'électricité.

30. Installation pour la préparation de plastiques mélangés, en particulier en vue de la réalisation du procédé selon l'une des revendications précédentes, présentant un étage de déchiquetage (10, 11, 12) et un séparateur magnétique (15), et un agglomérateur (50) pour le matériau déchiqueté,
charactérisée par
des dispositifs d'aspiration (55) pour l'aspiration de la vapeur d'eau, les cendres et le papier comme des matières volatiles pendant l'agglomération, un parcours de séchage (60) du matériau aggloméré et un tamis fin (65) pour la séparation par tamisage de la fraction granulométrique fine du matériau aggloméré.

31. Installation selon la revendication 30, **caractérisée par** un tamis grossier (70) installé en aval de l'agglomérateur (50), pour séparer par tamisage la fraction granulométrique supérieure du matériau aggloméré.

32. Installation selon les revendications 30 ou 31, **caractérisée par** un aéroséparateur (30) installé en aval de l'étage de déchiquetage (10, 11, 12), pour la séparation des matières lourdes du matériau déchiqueté.

33. Installation selon la revendication 32, **caractérisée en ce que** dans sa partie aval, non tournée vers le ventilateur (32), l'aéroséparateur (30) présente un parcours de tamisage (34), et en particulier un tamis oscillant, qui est disposé essentiellement en parallèle par rapport à l'écoulement d'air provenant du ventilateur (32), de sorte que la partie aval de l'aéroséparateur (30) est divisée en une zone supérieure et une zone inférieure, **en ce qu'**un transporteur à griffes (38) est disposé en position contiguë à cette partie inférieure, et **en ce qu'**un canal aéraulique (35) relie la partie supérieure à la partie centrale du transporteur à griffes (38).

34. Installation selon l'une des revendications 30 à 33, **caractérisée par** un silo-tampon (40) qui présente une vis verticale (45) servant à mettre en rotation le produit entreposé, et dont la sortie est reliée à l'agglomérateur (50).

35. Installation selon l'une des revendications 30 à 34, **caractérisée en ce que** le tamis fin servant à séparer par tamisage la fraction granulométrique fine du matériau aggloméré est configuré comme tambour tamiseur (65), et est disposé dans le parcours de séchage (60) servant à sécher le matériau aggloméré.

36. Installation selon l'une des revendications 30 à 35, **caractérisée par** un séparateur à écoulement tourbillonnaire (80) installé en aval de l'agglomérateur (50) et du parcours de séchage (60).

37. Installation selon l'une des revendications 30 à 36, **caractérisé par** les parties décrites ci-dessous et reliées les unes aux autres par des moyens de transport, à savoir:
a) une déchiqueteuse (10) présentant un mécanisme de compactage (12) dont la sortie est reliée à l'entrée d'un séchoir tubulaire rotatif (20);
b) un aimant (15) surmontant une bande, disposé en aval de la déchiqueteuse (10);
c) un séchoir tubulaire rotatif (20) dont la paroi (22) est dotée de perforations de tamisage et dont la sortie est reliée à l'entrée (29) d'un aéroséparateur (30);
d) un aéroséparateur (30) dont la sortie des matières légères est reliée à l'entrée d'un silo-tampon (40);
e) un silo-tampon (40) qui présente une vis verticale (45) et dont la sortie est reliée à un agglomérateur (50);
f) un agglomérateur (50) qui présente des dispositifs d'aspiration (55) pour aspirer de la vapeur d'eau, les cendres et le papier comme des matières volatiles pendant l'agglomération et dont la sortie est reliée à un parcours de séchage (60) ;
g) un parcours de séchage (60) dans lequel est disposé un tambour tamiseur (65) pour la séparation par tamisage de la fraction granulométrique fine du matériau aggloméré et qui conduit à un crible à barreaux (70);
h) un crible à barreaux (70) dont la sortie du passant de tamisage est reliée à un tamis oscillant (75);
i) un tamis oscillant (75) dont la sortie du passant de tamisage est reliée à un silo d'entreposage (100) et dont la sortie du refus de tamisage est reliée à un séparateur à écoulement tourbillonnaire (80);
j) un séparateur à écoulement tourbillonnaire (80) dont la sortie des non-métaux est reliée à un broyeur à lames (90);
k) un broyeur à lames (90) dont la sortie est reliée au tamis oscillant (75); et
l) un silo d'entreposage (100).
